# EUROPÄISCHE PATENTANMELDUNG

(11) **EP 0 626 192 A1**
(43) Veröffentlichungstag der Anmeldung: **30.11.1994**
(21) Anmeldenummer: 94105317.5
(22) Anmeldetag: 06.04.1994
(51) Int. Cl.: B01D 65/02, B01D 29/09, B01J 20/34, B01J 49/00

(54) **Regenerierbare Separationselemente, deren Verwendung und dafür geeignete Gehäuse**

(30) Priorität: 06.04.1993 DE 4311297
(71) Anmelder: Steinbeis Gessner GmbH, D-83098 Brannenburg (DE)
(72) Erfinder: Hoffmann, Jürgen, Dr., D-83135 Schechen (DE); Lemke, Andreas, D-83569 Vogtareuth (DE); Brett, Elke, D-83024 Rosenheim (DE); Heiniger, Hans-Ulrich, Dr., D-83229 Aschau (DE)
(74) Vertreter: Zangs, Rainer E., Dipl.-Ing.

(57) **Zusammenfassung**

Die Erfindung betrifft aus Wickeln (1, 1 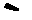 ), aus Spiralwickeln (36), aus Faltenpaketen bzw. Faltenbälgen (28, 28 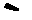 ) oder aus Segmentstapeln (37) gebildete, regenerierbare Separationselemente für die Behandlung flüssiger und gasförmiger Medien, deren aus Separationsmitteln und oder Drainageelementen bestehende Lagen (5, 5 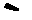 ) bzw. Separationsmedien (7, 7 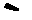 ), Separations- oder Filtereinheiten (18) oder Separations- oder Filtersegmente (40) in geeigneten, erfindungsgemäßen Gehäusen (1) durch Umwickeln, Aufwickeln, Umfalten, Umklappen, Umbiegen oder Auslenken vereinzelt werden können, so daß eine, für die Regeneration notwendige, direkte Wechselwirkung mit einem Regenerationsmedium (21) und oder mindestens einer Regenerationseinheit (2, 2 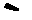 ) möglich ist. Mit den erfindungsgemäßen Separationselementen, die je nach Variante statisch, crossflowartig oder nach dem Dialyseprinzip betrieben werden können, lassen sich neue Separationsaufgaben wirtschaftlich und bekannte Separationsaufgaben wirtschaftlicher lösen sowie der anfallende Abfall an verbrauchten Separationselementen erheblich vermindern.

## Beschreibung

Die Erfindung betrifft regenerierbare Separationselemente für die Behandlung flüssiger und gasförmiger Medien, die fadenförmige, faserförmige, flächige , hohlfaserförmige, schlauchförmige oder rohrförmige, oberflächenaktive und/oder poröse Separationsmaterialien enthalten und in einem geschlossenen Gehäuse betrieben werden können.

Separationsmaterialien im Sinne der Erfindung werden im allgemeinen Sprachgebrauch als Filtermaterialien bezeichnet. In dieser Druckschrift werden bevorzugt die Begriffe Separationsmaterialien und Separationsmedien gebraucht, um zu unterstreichen, daß für deren Wirkung nicht unbedingt eine Durchströmung nötig ist, sondern die Wechselwirkung auch bei einfachem Medienkontakt durch adsorptive, chemische, katalytische, kapillare (saugende) oder andere Mechanismen erfolgen kann.

Separationsmedien können aus einem oder verschiedenen Separationsmaterialien bestehen. Sie werden bezüglich ihrer Porengröße bzw. Trenngrenzeigenschaften (Grob-, Fein-, Mikro-, Ultrafiltration und Reverse Osmose), ihres Trennmechanismus (Sieb ,Tiefenfiltration, Adsorptive Filtration, Pervaporation, Dampfpermeation, Gastrennung ..) und ihrer Wechselwirkung mit dem zu behandelnden Medium (spezifische und unspezifische Adsorption, Chromatographie, Katalyse, Ionenaustausch, Kapillarwirkung, Elektretwirkung ..) charakterisiert. Die Separationsmedien wirken also sowohl als Barriere als auch Adsorber und Reaktionsfläche bzw. Reaktionsvolumen für bestimmte Inhaltsstoffe von Gasgemischen, Aerosolen, Flüssigkeitsgemischen, Lösungen sowie kolloidalen und partikulären Suspensionen.

Regeneration bedeutet, daß durch physikalische und chemische Behandlung der Separationsmedien die ursprünglichen bzw. bestimmte, gewünschte Eigenschaften mehrfach und zumindest zum Teil wieder eingestellt bzw. hergestellt werden können. Dabei kann die Regeneration in Stufen und durch Anwendung verschiedener Verfahren erfolgen. Eine spezielle Form der Regeneration ist die Reinigung, bei der vom Separationsmedium (Filtermedium) gezielt oder unerwünscht zurückgehaltene oder mit dem Separationsmaterial wechselwirkende Substanzen wieder entfernt werden.

Die operationszustände der Separationselemente, in denen die Regeneration erfolgen kann, werden wie folgt definiert. Die Regeneration kann während der Separation (permanent oder zeitweise) "on line on" erfolgen, sie kann in der Anlage ohne Austausch des zu behandelnden Mediums bei unterbrochenem Separationsvorgang "on line off" stattfinden, sie kann in der Anlage nach Entfernung des zu behandelnden Mediums "in place" oder nach Ausbau aus der Anlage "ex place" durchgeführt werden.

Die "on line on" Regeneration während der Separation nimmt eine gewisse Sonderstellung ein. Sie zielt sowohl auf die Vermeidung oder Minimierung des sog. Foulings (irreversible Veränderung des Separationsmediums) z.B. durch Anlegen einer elektrischen Spannung, überlagern von Ultraschallwellen oder Vibrationen, Zusatz von, die Separation erleichternden Stoffen oder das unten beschriebene Cross-Flow-Prinzip, als auch auf die Behebung des Foulings z.B. durch Modulkompression oder Fluxvariation, ohne daß die Separation unterbrochen wird.

Faserförmige, flächige, hohlfaserförmige oder schlauchförmige, oberflächenaktive und/oder poröse Separationsmaterialien, an die, in denen oder zwischen denen ggf. adsorptive, ionenaustauschende, katalytisch wirkende Stoffe gebunden, fixiert oder eingelagert sind oder die Elektretcharakter haben, werden heute zur Erhöhung der Leistungsfähigkeit und Filtrationseffizienz zusammen mit anderen Komponeten, wie Schutz-, Drainage-, Stütz-, Adaptions- und Dichtelementen sowie Vergußmassen usw. zu Separations- bzw Filterelementen verarbeitet. Die Bauform der Separationselemente wird durch die Anwendung und die Anlage, in der sie betrieben werden, bestimmt.

Einen Gesamtüberblick zum Stand der Technik in der Fest- Flüssig-Separation gibt der Anhang zum Artikel "Auswahl von Apparaten zur Fest-Flüssig-Filtration" von F. Hardekopf et al in der Zeitschrift Filtrieren und Separieren 6 (1992) 278 - 305.

Die vorliegende Erfindung bezieht sich ausschließlich auf Separationselemente, die im Separationszustand umgeben vom zum behandelnden Medium, in geschlossenen Gehäusen mit mindestens zwei Öffnungen oder Anschlüssen für den Medienaustausch, sowohl drucklos, als auch bei Überdruck oder Unterdruck betrieben werden können.

Beispiele für solche Separationselemente sind zylindrische, gewickelte oder plissierte Filterkerzen, Flachfiltermodule in Stapelbauweise und sog. Hohlfaser- oder Rohrmodule mit integriertem Gehäuse.

Die kompakte, starre Bauweise heutiger Separationselemente bzw. -module ist auch eine Folge, der häufig rauhen Betriebsbedingungen, bei denen es nicht selten zu Druckschlägen, Pulsationen, Vibrationen, grassen Temperaturwechseln usw. kommt.

Mittel zur Erhöhung der Lebensdauer solcher Separationselemente sind eine Medienvorbehandlung bzw. Vorfiltration oder die Kombination verschiedener Separations- oder Filtermedien, wie sie z.B. in der DE 3805299 beschrieben ist.

Diese Präventivmaßnahmen reichen häufig nicht für einen wirtschaftlichen Einsatz der bekannten Separationselemente aus, so daß zusätzlich Regenerationsschritte nötig sind.

Die Regeneration kann theoretisch in den vier oben beschriebenen operationszuständen erfolgen. Zur Anwendung kommen Druckstöße, Pulsationen, Gasspülung, Fluxumkehr, Fluxvariation, Rückspülungen mit erwärmten Filtrat, Spülung mit kaltem und heißem Wasser, Chemikalien usw.. Beispiele finden sich in den Druckschriften PCT WO 88/01895, DE 3423594, DE 39200973 oder DE 3914326.

Bei Anwendung der genannten Regenerationsmethoden wird die Konfiguration des Separationselementes zur Regeneration nicht Verändert, d.h. es kommt zu einer flächen- oder volumenunspezifischen Wechselwirkung zwischen dem Regenerationsmedium und dem Separationsmedium. Eine direkte Wechselwirkung einer Reinigungsvorrichtung mit Teilbereichen des Separationsmediums oder eine spezifischen Wechselwirkung bzw. gezielten Behandlung Von Teilbereichen des Separationsmediums mit dem jeweilig optimalen Regenerationsmedium ist kaum möglich, es sei denn das Separationselement besteht aus nur einer Lage oder ist sehr offen konstruiert.

Die offene Struktur steht, wie oben beschrieben, häufig einem prozeßsicheren Einsatz entgegen, während aus der Einlagigkeit des Separationsmediums in der Regel unwirtschaftliche Leistungen resultieren.

Für die erfindungsgemäßen Separationselemente wird vorausgesetzt, daß zur Erreichung der notwendigen Separationsleistung eine kompakte oder dicht gepackte Anordnung des Separationsmediums nötig ist und der Hauptflächenanteil bzw. die Hauptmasse des Separationsmediums im Separationszustand separationsaktiv genutzt werden kann.

Die oben erwähnten starren Bauformen erlauben die separationswirksame Nutzung des gesamten Separationsmediums, haben aber den Nachteil, daß die Gesamtheit der Oberfläche oder des Volumens des Separationsmediums kaum optimal, weil nicht frei zugänglich, zu regenerieren ist. Die Geometrie und die Elementkomponenten sind in der Regel auf den Separationsvorgang, die Separationsbedingungen sowie häufig angewandte Sterilisationsvorgänge und den dabei herrschenden Sterilisationsbedingungen abgestimmt. Es können nur Regenerationssmethoden angewandt werden, die mit der Konfiguration und allen Bestandteilen physikalisch und chemisch konform gehen. Tote Winkel erschweren nicht nur die Regeneration, sondern auch die restlose Entfernung von Regenerationsmitteln oder z.B. Mikroorganismen.

Eine Methode der Regeneration ist das sog. Cross-Flow-Verfahren.

Bei der Cross-Flow-Filtration wird versucht, durch tangentiales Überströmen des Filtermediums und Rezirkulierung des Retentats den Aufbau einer leistungsmindernden Deckschicht "on line on" zu verhindern. Bei der Konstruktion muß also zusätzlich sichergestellt sein, daß eine schnelle Überströmung (enge Kanäle) zumindest auf der Retentatseite möglich ist. Dieses Verfahren ist heute in der Mikro- und Ultrafiltration etabliert.

Bei vielen Anwendungen der Cross-Flow-Filtration hat sich aber gezeigt, daß das Überströmprinzip allein nicht ausreicht, um auf Dauer ein Fouling, d.h. eine permanente Veränderung der Filtermedien zu verhindern. In der Regel erfolgen zusätzliche Regenerationsschritte, wie bei der statischen Filtration, wobei dies in allen vier oben beschriebenen Operationszuständen erfolgen kann. Die Möglichkeit der Überströmung erlaubt zusätzliche Reinigungsvarianten, wie z.B. den Einsatz mechanisch, abrassiv wirkender Zusätze zum Retentatrezirkulat (Schwämme, starre Partikel ..).

Auch bei diesen Systemen wird die Konfiguration des Separationselements für die Regeneration nicht verändert, so daß bezüglich der Regenerationsmöglichkeiten die oben beschriebenen Nachteile für statisch arbeitende Separationssysteme gleichermaßen gelten.

Andere bekannte Separationselemente haben einen zylindrischen Aufbau, wobei nur der äußere oder innere Mantel des Separations- bzw Filterrohres separationswirksam ist. Die Separationsflächen dieser Module sind leichter zugänglich als bei den oben beschriebenen Systemen und z.B. physikalisch durch Abbürsten oder Absprühen reinigbar. Hierbei können sich die Bürsten, aber auch der Filterzylinder selbst bewegen, indem er rotiert oder eine Längsbewegung durchführt. Ein weiterer Vorteil ist, daß solche Konstruktionen kaum tote Winkel haben.

Die Filterfläche dieser Systeme ist bezogen auf den Raumbedarf, gegenüber gewickelten, plissierten, gestapelten oder gebündelten Filtereinheiten minimal.

Die Außenfläche des Mantels einer Filterkerze bzw. eines röhrenförmigen Separationselements mit 70 mm Durchmesser und 10 Inch Länge ist z.B. 550 cm². In Elementen gleicher Dimension lassen sich aber 8000 cm² eines mehrschichtigen Separationsmediums unterbringen, wenn dieses plissiert oder gewickelt vorliegt. Aus dem Flächenunterschied ergibt sich auch, daß die rohrförmige Konfiguration ein wesentlich höheres Totvolumen zur Folge hat.

Um ausreichende Flüsse oder Kontaktflächen sicherzustellen, müssen, je nach Anwendung und Trennschärfe, häufig viele solcher rohrförmigen Elemente oder einzelne Filtersegmente parallel in einem Gehäuse oder mehrere Gehäuse mit Einzelelementen parallel betrieben werden. Dies bedeutet einen hohen apparativen Aufwand bzw. im Fall von Großgehäusen wiederum eine Erschwernis der Regeneration im Gehäuse ("in place"), die Gefahr von fehlerhaft eingebauten Elementen oder Segmenten oder nicht funktionsfähiger Abdichtungen. Für die Behandlung außerhalb des Gehäuses ("ex place") ergeben sich lange Rüstzeiten und ein erhöhtes Risiko für Beschädigungen.

Bewegliche Filterbänder sind eine weitere Variante, um einen kontinuierlichen Flux zu erreichen. Dabei steht immer nur ein bestimmter, meist sehr kleiner Flächenanteil mit dem zu filtrierenden Medium in Kontakt. Es gibt die Varianten des Endlosbandes und der Bänder mit einer Ab- und Aufwicklung. In beiden Fällen kann das flächige Band an einer anderen Stelle der Anlage, als der Filtrationszone oder in einem weiteren Rollzyklus in der Filtrationszone regeneriert werden. Beispiele sind Rollbandfilter für die Luftentstaubung, Filterbandsysteme zur Membranchromatographie oder Bandfilter zur Schlammentwässerung.

Wie angesprochen ist der Nachteil dieser Filter, daß immer nur ein geringer Teil der Fläche bzw. Masse des Separationsmediums für den Separationsvorgang zur Verfügung steht und bei kontinuierlichen Sytemen während des Separationsvorgangs eine hermetische Abdichtung des Filtratraumes (es dürfen keine Bypässe großer als die Ausschlußgrenze des Filters auftreten) apparativ aufwendig ist. Meist handelt es sich um nicht geschlossene, vom Platzbedarf und der Konstruktion her gesehen, aufwendige Systeme.

Sowohl für die statische Filtration, als auch für die Cross-Flow-Filtration sind Systeme bekannt, bei denen ein Separationselement aus einzelnen übereinander oder nebeneinander gestapelten, vieleckigen oder runden Schichten aus Trägerplatten, Filtersegmenten, Drainagesegmenten, Dichtrahmen oder Dichtmasken usw. gebildet werden. Diese Systeme lassen sich theoretisch für eine Regeneration auseinanderbauen oder segmentieren. Dies ist aber mit einem erheblichen, in der Regel manuellem Aufwand und vor allem mit der Gefahr verbunden, daß es bei der Vereinzelung der Komponenten bzw. der Separatiossegmente oder beim Zusammenbau zu Beschädigungen kommt und oder beim Zusammenbau Fehler, z.B. in der Schichtenfolge oder durch fehlerhafte Abdichtung zwischen den einzelnen Segmenten, auftreten. Der Aufwand und die geschilderten Gefahren nehmen zumindest proportional mit der für den Separationsprozeß notwendigen Separationsfläche zu. Die beschriebene Art der Segmentierung birgt also eine große Prozeßunsicherheit und ist kaum zu automatisieren.

Bekannt sind auch Separationssysteme bei denen der mechanische Abscheidegrad ("Poren") über den Abstand der Wendel einer metallischen Spirale oder den Abstand zwischen zwei wendelförmig aufgewickelten Drähten bestimmt wird. Ein solches Separationselement ist z.B. in der DE 4022738 beschrieben. Bezogen auf die aktive Separationsfläche oder "Porosität" sind diese Systeme selbst den oben beschriebenen zylindrischen Systemen unterlegen. Zur Unterstützung der Regeneration kann zwar der Wendelabstand oder der Drahtabstand verändert werden. Insgesamt gesehen bleibt aber der Spiralcharakter jeweils erhalten. Die möglichen Dimensionsänderungen sind stark begrenzt und lassen nur sehr eingeschränkt eine direkte Wechselwirkung mit einem Regenerationselement zu.

Der Regeneration von Separations- oder Filtermedien kommt eine hohe wirtschaftliche Bedeutung zu. Durch eine erfolgreiche Regeneration läßt sich das Preis-/Leistungsverhältnis entscheidend verbessern. Auch können Anlagen, die eine "on line" Regeneration erlauben, kleiner dimensioniert werden. Dadurch reduzieren sich die Lagerkosten und die Kapitalbindung für Ersatzseparationselemente.

Die Regeneration von Separationsmedien hat auch umweltrelevante Auswirkungen. Zum einen werden durch die Mehrfachverwendung Resourcen geschont, zum anderen entschärft sich dadurch die Entsorgungsproblematik. Von besonderer Bedeutung ist, daß die von den Filtermedien zurückgehaltenen Stoffe häufig physiologisch gefährlich sind (Asbeststaub bei der Asbestsanierung, Rückstände bei der Chemikalienfiltration oder Filtration biologischer Medien usw.) und dadurch das normale Deponieren, das Verbrennen oder Wiederverwerten von Filtern oder Filterelementen nicht erlauben, wenn nicht eine vollkommene Regeneration, insbesondere Endreinigung möglich ist. Bei herkömmlichen Separationselementen wie Filtermodulen ist dies in der Regel erst nach aufwendiger Zerstörung der Module möglich.

Ein besonderes Problem stellen in diesem Zusammenhang z.B. Separationselemente dar, die im radioaktiven Bereich von Kernkraftwerken eingesetzt werden. Eine Regeneration von Separationsmedien ist auch immer dann von Vorteil, wenn der Transport und die Lagerung von Separationsmedien nur beschränkt möglich ist, wie z.B. auf Schiffen.

Elektrete, d.h. Filtermedien die permanente, elektrische Felder erzeugen, die zu einer erhöhten Filtereffizienz bei der Gasfiltration führen, können wie z.B. in der EP 182512 beschrieben, nur erzeugt werden, wenn direkt auf die Filterbahn eine elektrische Korona wirkt, d.h. nur wenn die Bahn durch ein entsprechendes elektrisches Feld geführt wird. Ähnlich wird Ultraschall durch hintereinander gestaffelte Materialien sehr stark gedämpft. Es erfolgt keine Wirkung in die Tiefe. Der Einsatz oder die Notwendigkeit einer Korona, von Ultraschall oder auch die Besprühung mit einer z.B. unter Hochdruck stehenden Flüssigkeit erfordert also die direkte Wechselwirkung der Regenerationseinheit mit der Oberfläche des Separationsmediums. Häufig ist für die Wechselwirkung auch ein definierter Abstand oder Winkel zwischen der Regenerationseinheit und der Oberfläche des Separationsmediums Voraussetzung. Ebenso muß beim Abtupfen oder Abreiben ein direkter Kontakt möglich sein muß.

Beinhaltet die Regeneration eine chemische Umsetzungen an der Filtermatrix eines Separationselements, so ist nicht auszuschließen, daß unerwünschte Reaktionen mit anderen Elementkomponenten stattfinden, daß es zu Verstopfungen kommt oder z.B. Chemikalien nicht restlos ausgespült werden können. Beispiele solcher Umsetzungen sind Versuche die Filteroberfläche bzw. die Oberfläche des Separationsmediums mit hydrophilen, oleophoben, hydrophoben, bioziden, die Entflammbarkeit hemmenden, Ionenaustauschfunktion besitzenden, das Zetapotential verändernden Imprägniermitteln, Polymerharzen usw. zu beschichten bzw. auszurüsten oder diese chemisch oder adsorptiv an das Filtermaterial zu koppeln.

Ähnliches gilt z.B. für die Immobilisierung von Enzymen, Katalysatoren usw. an Separationsmedien. Ohne direkte Applizierung käme es hier zu großen Verlusten und der Gefahr der Ausschleppung bei der Separation.

Bei bestimmten Anwendungen bzw. Medien wirken schon geringste Mengen von Inhaltsstoffen, um z.B. Mikrofilter zu blockieren. Es handelt sich dabei häufig um natürliche Medien, bzw. Flüssigkeiten, die aus Naturstoffen erzeugt werden und deren Filtrierbarkeit stark chargenabhängig ist. Eine wirtschaftliche Behandlung dieser Medien ist nur möglich, wenn mit einer spezifischen oder unspezifischen Regenerationsmethode kurzfristig wieder die Funktionsfähigkeit des Separationsmediums hergestellt werden kann. Ein Beispiel ist die prozeßmäßige Kaltsterilisation von Bier.

Eine mehrfache Regeneration ermöglicht auch das Erschließen neuer Anwendungen z.B. im Bereich der Umwelttechnik, die heute nicht oder mit wenig umweltfreundlichen Alternativverfahren bedient werden und für die die Filtration bisher aus Kostengründen nicht anwendbar war.

Regeneration, d.h. auch Ersatz und Minimierung von Filter- bzw. Separationshilfstoffen, die bisher nötig waren, um die Verblockung der nachgeschalteten, nicht oder nicht ausreichend regenerierbaren Separationselemente, hinauszuzögern. Filterhilfstoffe wie z.B. Kieselgur sind nicht nur ein Kostenfaktor beim Einkauf, sondern fallen z.B. in Brauereien in großen Mengen, als teuer zu entsorgender Abfall, an.

Der Mangel an Regerationsfähigkeit führt auch dazu, daß man heute ein Separationselement für nur ein zu behandelndes Medium einsetzt, weil bei den bekannten Bauformen eine absolute Reinigung häufig nicht sicherzustellen ist und somit die Gefahr der Sekundärkontamination für ein zweites Medium besteht. Es werden also mehrere Separationselemente benötigt, obwohl man, bezogen auf die gewollte Wirkung, mit einem Element auskommen könnte (Rüstzeiten, Lagerhaltung, Nutzungsgrad ...).

Eine ganzflächige, gezielte Regeneration würde es weiterhin erlauben, das Separationsmedium gewollt in verschiedene Effizienzqualitäten überzuführen oder die Effizienz bestimmende Eigenschaften auffrischen zu können.

Wirken die Matrix bzw. die Hohlräume oder nur die Oberfläche von anorganischen oder organischen Separationsmedien als Ab- oder Adsorber (hydrophil, hydrophob), sind in oder an ihnen funktionelle Gruppen fixiert bzw. Enzyme, Bakterien, Katalysatoren usw. immobilisiert, mit denen der oder die Wertstoffe oder Störstoffe aus einem aufzuarbeitenden Medium zurückgehalten oder beeinflußt werden können, so ist es von entscheidender Bedeutung, den Separationsvorgang vor der Erschöpfung der funktionellen Stoffe oder Gruppen zu beenden und somit einen Durchbruch zu verhindern oder die quantitative Gewinnung der Wertstufe oder die quantitative Entfernung der Störstoffe zu ermöglichen. Hierzu ist es erforderlich den Aktivitätsgrad nach der letzten Regeneration quantitativ bestimmen bzw. einstellen zu können. Letzteres ist bei den bekannten Systemen kaum möglich.

Der Erfindung lag daher die Aufgabe zu Grunde, prozeßsichere und für eine automatische Regeneration geeignete Separationselemente zu entwickeln, die es erlauben, daß während der Separationsphasen die gesamte oder eine chargenbedingt notwendige Fläche oder Masse von Separationsmitteln in Medienkontakt gebracht werden kann und in den Regenerationsphasen eine direkte Wechselwirkung der zu regenerierenden Zonen und Bereiche dieser Separationsmittel mit Regenerationsmedien und oder Regenerationseinheiten möglich ist.

Diese Aufgabe wird gemäß der vorliegenden Erfindung durch die im kennzeichnenden Teil des Patentanspruches 1 angegebenen Merkmale gelöst. Vorteilhafte Aus- und Weiterbildungen sind in den Unteransprüchen angegeben.

Demgemäß besteht der Gedanke der Erfindung darin, daß die für den Separationsprozeß notwendige Fläche oder Masse eines Separationsmittels, durch Vereinzelung der Separationsmedien (7, 7 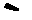 ), der Separations- oder Filtereinheit (18) oder der Separations- oder Filtersegmente (40)), für die Regenerationsphasen in eine andere, der Regeneration förderlichen, Konfiguration gebracht werden kann, ohne daß die Verbindung der Separationsmedien (7, 7 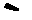 ) oder der Separations- oder Filtereinheit (18) bzw. der Separations- oder Filtersegmente (40) zu einer für die Medienzufuhr, die Medienabfuhr oder die automatisierbare Konfigurationsänderung notwendigen Vorrichtungen oder Achsen (4, 4 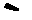 , 39) aufgehoben werden muß. Die Konfigurationsänderung muß mehrfach reversibel erfolgen können.

Im Rahmen dieser Druckschrift sind die Begriffe Medium und Mediumräume, Separationsmedium (7, 7 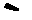 ), Separations- oder Filtereinheit (18) bzw. Separations- oder Filtersegment (40), Vereinzelung, Vereinzelungseinheit, Achsenanschluß (12, 12 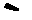 ) und Achsenanbindung (13, 13 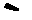 ) wie folgt definiert.

Medien sind alle flüssigen oder gasförmigen Substanzen, die durch Kontakt mit einem Separationsmedium (7, 7 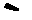 ) einem Separationsprozeß unterzogen werden sollen. Medienräume werden gebildet, wenn das Medium, durch die Separations- oder Filtereinheit (18), die Separationsmedien (7, 7 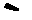 ) oder die Separations- oder Filtersegmente (40), in einem Gehäuse (3, 3 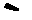 ) in zwei Volumenanteile getrennt wird.

Wie vorne beschrieben, werden Separationsmittel im allgemeinen Sprachgebrauch als Filtermaterialien bezeichnet. In dieser Druckschrift wird jedoch bevorzugt der Begriff Separationsmittel und Separationsmedien (7, 7 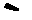 ) benutzt, um zu unterstreichen, daß für deren Wirkung nicht unbedingt eine Durchströmung (Filtration) nötig ist. Ein Separationsmedium (7, 7 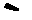 ) kann aus einer oder mehreren gleichen oder verschiedenen Lagen bestehen. Eine Lage eines Separationsmediums (7, 7 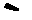 ) kann ein oder verschiedene Separationsmittel enthalten. In einem Separationselement können mehrere gleiche oder verschiedene Separationsmedien (7, 7 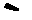 ) in Folge wirksam sein.

Die Separations- oder Filtereinheit (18) und das Separations- oder Filtersegment (40) stellen im Sinne der Erfindung die größten Einheiten dar, die vereinzelt werden müssen, um eine erfolgreiche Regeneration durchführen zu können, indem sie selbst mit Regenerationseinheiten (2, 2 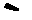 , 2 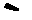 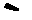 ..) wechselwirken oder Voraussetzung für eine notwendige weitere Vereinzelung sind. Eine Separations- oder Filtereinheit (18) bzw. ein Separations- oder Filtersegment (40) enthält immer mindestens ein Separationsmedium (7, 7 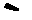 ). Da bei mehrlagigem Aufbau von Separations- oder Filtereinheiten (18) bzw. Separations- oder Filtersegmenten (40), für den Kontakt zwischen einem Medium und einem Separationsmedium (7, 7 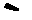 ), immer Schichten durchströmt werden müssen, werden die Begriffe Separations- oder Filtereinheit bzw. Separations- oder Filtersegment benutzt.

Der Begriff Vereinzelung wird im Sinne der Erfindung dahingehend gebraucht, daß für den Regenerationsvorgang die Konfiguration der Separationselemente so verändert werden muß, daß einzelne frei zugängliche Abschnitte der Separations- oder Filtereinheit (18), der Separations- oder Filtersegmente (40) oder der Separationsmedien (7, 7 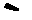 ) über einen für die Regeneration erforderlichen Zeitraum zumindest mit einem Regenerationsmedium (21) und oder einer Regenerationseinheit (2, 2 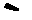 , 2 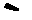 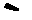 ..) wechselwirken können müssen. Die erfindungsgemäßen Varianten der Wechselwirkung werden später definiert.

Vereinzelungsvorrichtungen im Sinne der Erfindung sind Einbauten im Separationsgehäuse bzw. Gehäuse (3), die es im Zusammenwirken mit einer, für die Konfigurationsänderung, die Medienzufuhr oder die Medienabfuhr notwendigen Vorrichtung bzw. Achse (4, 4 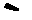 , 39) ermöglichen, daß die Separations- oder Filtereinheit (18), die Separations oder Filtersegmente oder die Separationsmedien (7, 7 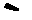 ) eines Separationselmentes vereinzelt werden können. In dieser Druckschrift beschriebene Vereinzelungsvorrichtungen sind Umlenkrollen oder Umlenkstäbe (14, 14 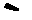 ), Vereinzelungsbleche (27), Fixierungsachsen (33) sowie die Achsen (4) oder (4 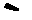 ).

Achsenanschlüsse (12, 12 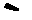 ) sind zum Gehäuse gehörige Vorrichtungen, die es erlauben, daß die Achsen (4, 4 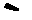 , 39) und Vereinzelungsvorrichtungen in Bewegung gesetzt werden können. Bei speziellen Ausführungsformen können über die Achsenanschlüsse (12, 12 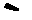 ) dem Gehäuse (3) Medium zugeführt oder von ihm abgeführt werden. Weiterhin können die Achsenanschlüsse (12, 12 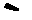 ) auch unlösbar mit Vereinzelungsvorrichtungen und oder den Achsen (4, 4 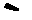 , 39) verbunden sein. Der Antrieb für die Achsenanschlüsse kann sowohl im als auch außerhalb des Gehäuses installiert sein.

Die Achsenanbindungen (13, 13 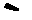 ) sind Verarbeitungsformen oder Vorrichtungen der Separations- oder Filtereinheit (18), der Separationsmedien (7, 7 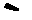 ), der Separations- oder Filtersegmente (40) und der Anschlußbänder (23), die gegebenenfalls mit entsprechenden Vorrichtungen an den Achsen (4, 4 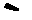 ,39) korrespondieren, um die für die erfindungsgemäßen Separationselemente erforderliche Verbindung mit einer für die Konfigurationsänderung, die Medienzufuhr oder die Medienabfuhr notwendigen Vereinzelungsvorrichtung oder Achse (4, 4 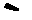 , 39) zu bewerkstelligen.

Dem Erfindungsgedanken entsprechend lassen sich folgende Grundtypen an regenerierbaren Separationselementen beschreiben:
1) Das Separationselement besteht im Separationszustand aus einem (1) oder aus zwei miteinander verbundenen Wickeln (1, 1 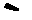 ), der oder die das Separationsmedium (7) enthalten. Für die Regeneration können diese Wickel (1, 1 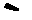 ), unter Vereinzelung der Separations- oder Filtereinheiten (18) oder der Separationsmedien (7, 7 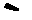 ), auf-, ab- und umgewickelt werden.
2) Das Separationselement besteht im Separationszustand aus einem (28) oder aus zwei miteinander verbundenen, kompakten Faltenpaketen oder Faltenbälgen (28, 28 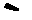 ), die ein Separationsmedium (7, 7 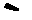 ) enthalten. Für die Regeneration können diese Faltenpakete (28, 28 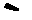 ), zur Vereinzelung der Separations- oder Filtereinheiten (18) oder der Separationsmedien (7, 7 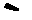 ), entfaltet, umgefaltet oder umgeklappt werden.
3) Das Separationselement enthält Separationsmedien (7, 7 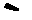 ), die sternförmig bzw. radial an einer zentralen Achse (4) fixiert sind und im Separationzustand allein oder in einer Separations- oder Filtereinheit (18), ggf. zusammen mit weiteren Schutz- und Drainageelementen (8, 8 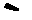 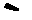 ) einen kompakten Spiralwickel (36) um diese Achse (4) bilden. Für die Regeneration können die Sternsegmente der Separations- oder Filtereinheiten (18) oder der Separationsmedien (7, 7 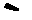 ), durch Aufoder Umwickeln des Spiralwickels, vereinzelt werden.
4) Das Separationselement ist ein Segmentstapel (37) der durch mehrere runde, rechteckige oder vieleckige, flächige oder dreidimensionale Separations- oder Filtersegmente (40), die geeignete Zuschnitte des Separationsmediums (7) enthalten, gebildet wird. Die Separations- oder Filtersegmente (40) sind fest mit einer Achse (4) oder der Drehachsenführungsachse (39) verbunden, die für die Konfigurationsänderung, die Medienzufuhr oder die Medienabfuhr notwendig sind. Für die Regeneration können die Separations- oder Filtersegmente (40), unter Beibehaltung der Verbindung zur Achse (4) bzw. der Drehführungsachse (39), vereinzelt werden.

Die Separations- oder Filtereinheiten (18) oder die Separations- oder Filtersegmente (40) können, je nach Anwendung, Separationsmedium oder Regenerationsmethode bzw. Regenerationsverfahren, verschieden aufgebaut sein. Sie sind die Grundeinheiten, aus denen die oben beschriebenen Wickel (1, 1 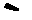 ), Faltenpakete (28, 28 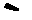 ), Spiralwickel (36) und Segmentstapel (37) gebildet werden und enthalten immer die Separationsmedien (7, 7 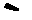 ).

Einige erfindungsgemäße Varianten der oben beschriebenen Grundtypen werden an Hand von Abbildungen näher erläutert. Weiterhin werden in diesen Abbildungen Details dargestellt, die mit speziellen, in den Anwendungsbeispielen beschriebenen Ausführungsformen und Verfahrensweisen bei der Separation und Regeneration, korrespondieren sowie Gehäuse- und Anlagenkonzepte für die erfindungsgemäßen Separationselemente skizziert.

Dabei zeigt
- Abbildung 1A: einen Längsschnitt durch ein Separationsgehäuse mit Regenerationseinheiten, in dem ein erfindungsgemäßes Separationselement vom Typ 1 installiert ist,
- Abbildung 1B: einen Horizontalschnitt durch das Separationsgehäuse von Abbildung 1A, jedoch ohne Separationselement,
- Abbildung 2: einen Längsschnitt durch ein Separationsgehäuse mit einer Regenerationswanne und Regenerationseinheiten, in dem ein erfindungsgemäßes Separationselement vom Typ 1 installiert ist,
- Abbildung 3 und 4A: einen Längsschnitt durch zwei erfindungsgemäße Separationselemente vom Typ 1,
- Abbildung 4B: eine perspektivische Ansicht eines der Separationselemente aus Abbildung 4A,
- Abbildungen 5: einen Querschnitte durch einen Wickel eines Separationselements vom Typ 1 und eine schematisierte Darstellungen zur Abscheidequalität
- Abbildungen 6: einen Querschnitte durch eine schlauchförmige Separations- oder Filtereinheit,
- Abbildung 7A: einen Querschnitt durch eine Separations- oder Filtereinheit mit Lagen, die in den Randbereichen mit Dichtelementen versehen sind,
- Abbildung 7B: eine perspektivische Ansicht eines Wickels eines Separationselements vom Typ 1 mit einer Separations- oder Filtereinheit gemäß Abbildung 7A,
- Abbildung 8A: eine perspektivische Ansicht eines Separationselements vom Typ 2 mit 3 Regenerationseinheiten,
- Abbildung 8B: die Vergrößerung der gekennzeichneten Stelle aus Abbildung 8A,
- Abbildung 9: den Längsschnitt durch ein Separationselement vom Typ 2, welches in einem Gehäuse installiert ist,
- Abbildung 10: den Längsschnitt durch ein Separationselement vom Typ 2,
- die Abbildungen 11A und 11B: Querschnitte durch Separationselemente vom Typ 3,
- die Abbildungen 12A und 12B: schematische Darstellungen zu Separationselementen des Typs 4,
- Abbildung 13: die perspektivische Darstellung eines Separationselements vom Typ 1, mit einem Standardfilterelement als Drehachse,
- Abbildung 14A: eine bevorzugte Anordnung von drei Separationselementen des Typs 1, Abbildung 14B eine bevorzugte Anordnung von sechs Separationselementen des Typs 1,
- Abbildung 14C: eine weitere bevorzugte Anordnung von sechs Separationselementen des Typs 1
- und Abbildung 15: ein schematisches Flußdiagramm für eine Anlage, in der erfindungsgemäße Separationselemente betrieben werden können.

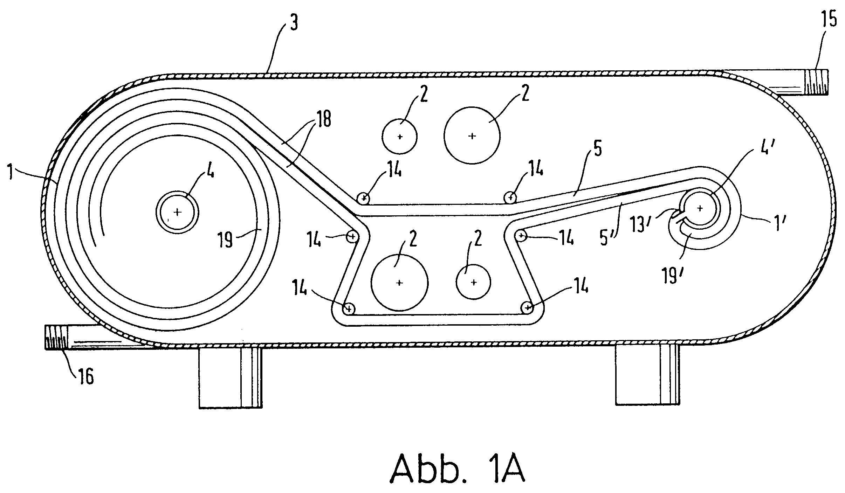

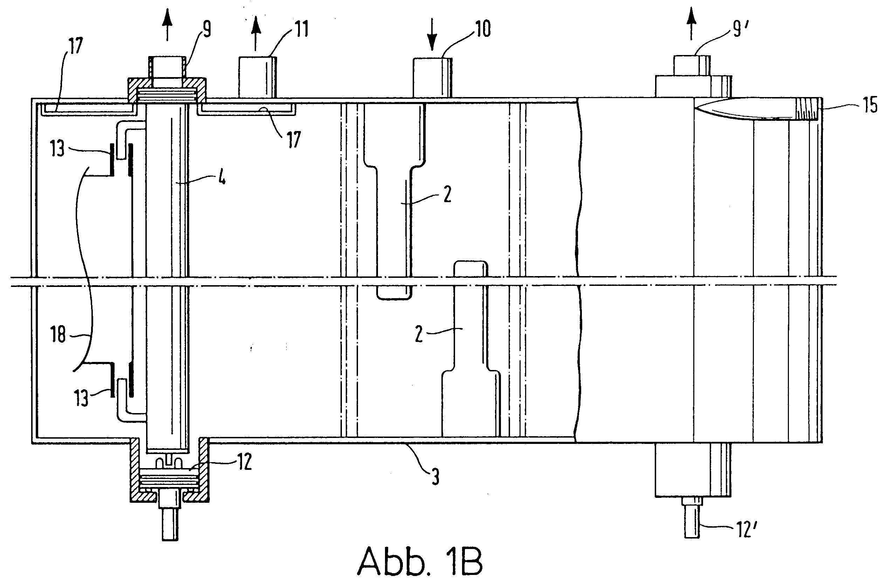

Abb. 1A ist der Längsschnitt durch ein Gehäuse (3), das mit einem erfindungsgemäßen, gewickelten Separationselement des Typs 1 und Regenerationseinheiten (2) bestückt ist. Abb. 1B ist der horizontale Schnitt durch dieses Gehäuse (3), jedoch ohne installiertes Separationselement.

Der größte Anteil der aus 2 Lagen bzw. Schichten (5, 5 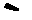 ) bestehenden Separations- oder Filtereinheit (18) befindet sich im abgebildeten Zustand als Wickel (1) auf der Achse (4). Eine oder beide Lagen (5, 5 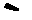 ) sind über die Achsenanbindung (13) mit der Achse (4) so verbunden, daß z.B. während der Regeneration das Umwickeln sicher erfolgen kann. Dasselbe gilt für den Wickelanteil (1 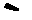 ), der sich auf der Achse (4 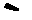 ) befindet und über die Achsenanbindung (13 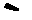 ) mit der Achse (4 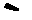 ) verbunden ist. In dem abgebildeten Beispiel werden die beiden Lagen bzw. Schichten (5) und (5 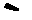 ) der Separations- oder Filtereinheit (18) zusätzlich über Umlenkstäbe oder Umlenkrollen (14) zwischen den beiden Achsen (4, 4 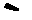 ) vereinzelt.

Die Achsen (4) und (4 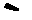 ) können manuell oder mit einem automatischen Antrieb über die Achsenanschlüsse (12) und (12 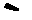 ) in beide Richtungen kontinuierlich oder schrittweise bewegt werden und sie erlauben bei Bedarf die Zufuhr oder das Abführen von Medium über die Achsenöffnungen (9) und (9 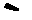 ). Es ist auch möglich, daß die Achsenanschlüsse (12, 12 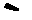 ) so ausgebildet werden, daß über sie Medium zu- oder abgeführt werden kann und sie somit die Funktion der Achsenöffnungen (9) und (9 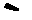 ) übernehmen. Ein anwendungsspezifischer Medienaustausch, kann auch über die Gehäuseöffnungen (10), (11), (15) und (16) erfolgen. Die Öffnung (15) ist am höchsten Punkt angebracht, um eine vollkommene Entlüftung zu erlauben. Die Öffnung (16) befindet sich am tiefsten Punkt, um eine vollkommene Entleerung zu gewährleisten. Beide Effekte können durch eine geringe Schrägstellung des Gehäuses noch verbessert werden. Die Öffnung (11) korrespondiert mit einem Ringkanal (17), in dem z.B. Medium, daß über die Wickelstirn (19) eintritt und einzelne Lagen der Separationseinheit (18) überströmt, gesammelt, durch die Öffnung (11) abgeführt und gegebenenfalls über die Öffnung (10) rezirkuliert werden kann.

Die zusätzliche Vereinzelung der beiden Lagen (5, 5 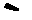 ), der durch den Umwickelvorgang vereinzelten Separations- oder Filtereinheit (18), über die Umlenkstäbe oder Umlenkrollen (14) erfolgt z.B. deshalb, weil in der Regenerationsphase beide Seiten der Lage oder Schicht (5), die z.B. ein Separationsmedium (7, 7 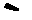 ) ist, mit den Regenerationseinheiten (2) wechselwirken sollen. Die Lage oder Schicht (5 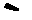 ) ist z.B. ein Abstandshalter bzw. eine Drainage (8), die es erlaubt, daß Medium über die Stirnseiten (19) und (19 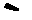 ) in die Wickel eindringen und mit der gesamten Fläche der Lage oder Schicht (5) in Kontakt kommen kann.

Abb. 1A entspricht der Anordnung während der Separation. Zur Regeneration wird der Wickel (1) durch drehen der Achse (4 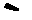 ), bezogen auf den Durchmesser, abgebaut, während sich der Wickel (1 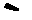 ) auf der Achse (4 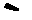 ) aufbaut. Während des Wickelvorgangs können beide Seiten der Lage oder Schicht (5) mit den Regenerationseinheiten (2), die z.B. Ultraschallrohrresonatoren sind, wechselwirken. Die sich über den wachsenden Durchmesser vom Wickel (1 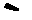 ) ergebenden Geschwindigkeitsveränderungen beim Wickelvorgang werden, soweit dies notwendig ist, über eine Steuerung des Antriebs, der auf den Achsenanschluß (12 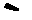 ) wirkt, kompensiert. Hat der Durchmesser des Wickels (1 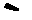 ) den ursprünglichen Durchmesser des Wickels (1) angenommen, so wird der Wickelvorgang in umgekehrter Richtung wiederholt oder es kann, bei hinreichender Regeneration, sofort ein neuer Separationsprozeß erfolgen.

Hat die Achse (4) z.B. einen Durchmesser von 40 mm, ist die Breite der Separations- oder Filtereinheit (18) 500 mm und die Dicke 4 mm, so ergibt sich im Ausgangszustand für den Wickel (1), bei 10 Umwicklungen, ein Durchmesser von 120, bei 14 Umwicklungen von 152 mm. Ist je die Hälfte der Fläche auf beiden Achsen (4, 4 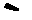 ) aufgewickelt, so ist der Durchmesser der Wickel (1) und (1 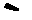 ) jeweils 89 bzw. 111 mm. Sind beide Seiten der Lage oder Schicht (5) aktiv, so ergibt sich für 10 Umwicklungen eine Fläche von 2,5 m², für 14 Umwicklungen eine Fläche von 4,2 m² und eine mittlere Länge von 2,5 bzw. 4,2 m für die Bahnlänge.

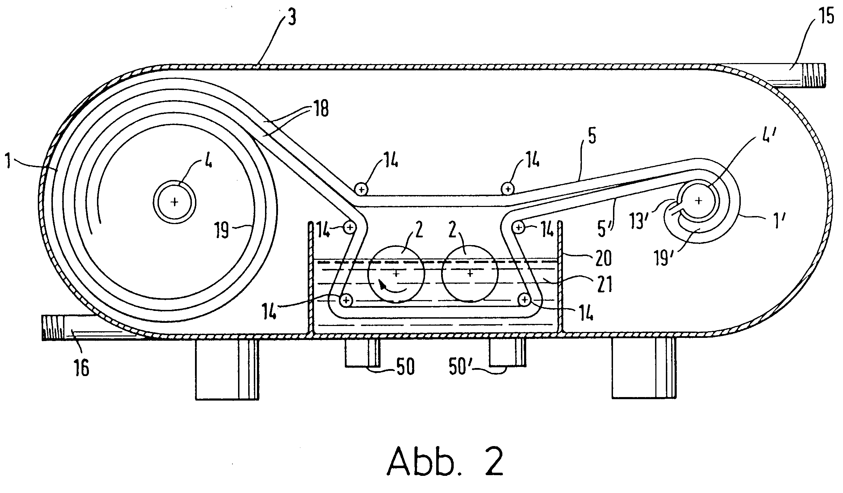

Abbildung 2 ist eine Variante von Abbildung 1A. Die zusätzlich vereinzelte Lage (5 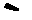 ) stellt hier das Separationsmedium (7, 7 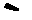 ) dar, das in einer, im Gehäuse (3) eingebauten, Regenerationswanne (20) mit einem Regenerationsmedium (21) und oder mit den Reinigungseinheiten (2, 2 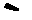 ) direkt in Wechselwirkung treten kann. Das Regenerationsmedium kann über die Anschlüsse (50, 50 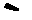 ) erneuert oder ausgetauscht werden. In einem Gehäuse (3) kann die zu regenerierende Lage oder Schicht (5 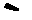 ) mehrere solcher Regenerationswannen (20) durchlaufen und auch mit weiteren Regenerationseinheiten (2, 2 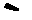 ...), in Wechselwirkung treten.

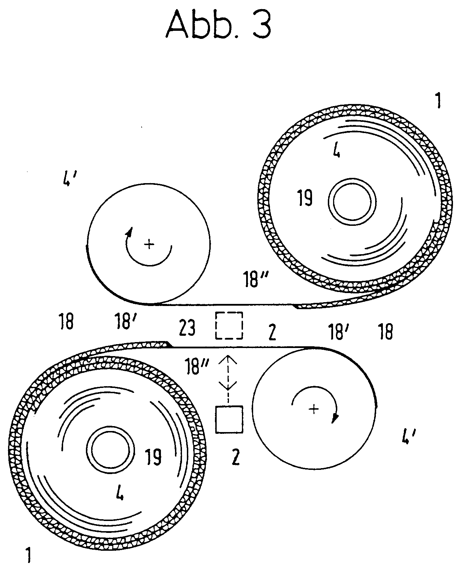

Anhand der Abbildung 3 kann auf weitere Details zur Funktionsfähigkeit der erfindungsgemäßen Separationselemente eingegangen werden. Es sind zwei baugleiche Doppelwickel in Brillenform dargestellt, wobei sich die Separations- oder Filtereinheiten (18) ausschließlich auf den Achsen (4) befinden. In der dargestellten Variante ist ein Mediumaustausch nur über die Achsen (4) möglich. Die Achsen (4 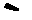 ) dienen nur als Dreh- bzw. Vereinzelungsachsen. Der große Durchmesser der Achsen (4 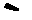 ) bewirkt, daß die Geschwindigkeit der Separations- oder Filtereinheiten (18) bei konstanter Geschwindigkeit der Achsen (4') nur gering variiert. Die Anbindung an die Achsen (4 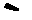 ) erfolgt nicht direkt über die Separations- oder Filtereinheiten (18) sondern über Anschlußbänder (23). Diese Anschlußbänder (23) können wesentlich länger als dargestellt sein und im Separationszustand die äußersten Umwicklungen der Wickel (1) darstellen und zum Schutz der Separations- oder Filtereinheiten (18) dienen oder eine kompaktere Wickelung ermöglichen. Das Anschlußband (23) kann z.B. ein stabiles Gewebe, ein Spunbond-Vlies oder eine mediumdichte Folie sein. Weiterhin kann es ganzflächig oder fensterartig durchbrochen sein, so daß z.B. in dem dargestellten Zustand die Regenerationseinheit (2) zur Regeneration des oberen Doppelwickels durch das Anschlußband (23) hindurchgeschoben oder durch die Durchbrechungen bzw. das Fenster hindurch wirksam werden kann.

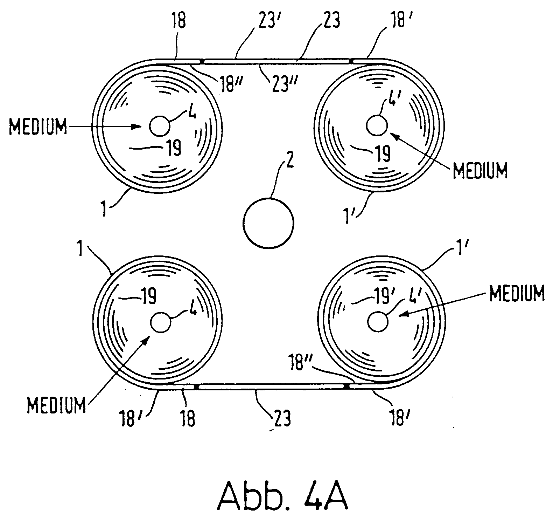

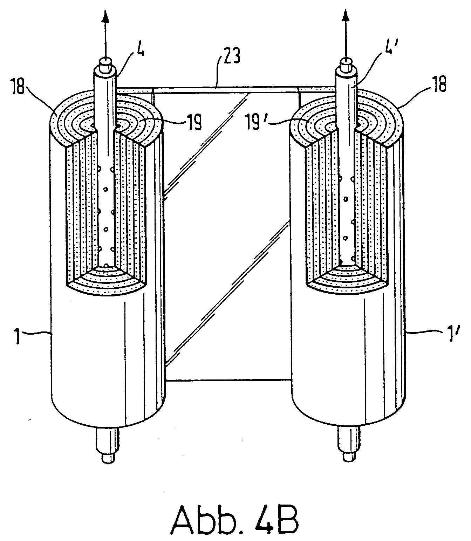

In Abbildung 4A sind zwei baugleiche Doppelwickel mit je einem Wickel (1, 1 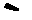 ) im Querschnitt, in Abbildung 4B ist ein entsprechender Doppelwickel perspektivisch dargestellt. Dabei sind beide Wickeldurchmesser gleich. Über beide Achsen (4, 4 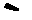 ) kann z.B. Medium abgeführt werden. Die Anschlußbänder (23) verbinden in diesem Fall die Wickel (1, 1 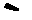 ) miteinander. In diesem und in den folgenden Beispielen, können die Anschlußbänder (23) identisch mit den Separations- oder Filtereinheiten (18) sein oder sie sind ein Bestandteil bzw. eine oder mehrere Lagen von (18). In den Abbildungen 4A und 4B ist ein Separationszustand dargestellt, wie er bei Wickelkerzen des Standes der Technik üblich ist, deren nicht miteinander verbundene Wickel (1, 1 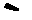 ) bei der statischen Filtration vom Wickelumfang senkrecht zur Wickelachse (4, 4 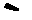 ), vom dem zu behandelnden Medium, durchströmt werden. Während der Regenerationsphase, der in Abbildung 4A und 4B dargestellten erfindungsgemäßen Separationselemente, können durch Umwickeln die Separations- oder Filtereinheiten (18) vereinzelt werden und beide Seiten von (18) mit der Regenerationseinheit (2), z.B. einer Ultraschallquelle, wechselwirken. Diese Wechselwirkung erfolgt für die Außenseiten der Separations- oder Filtereinheiten (18 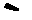 ) auf den Wickelachsen (4, 4 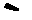 ), während sie für die Innenseiten (18 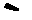 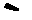 ) im freien Bereich erfolgt, der in der Abb. 4A (Separationszustand) von dem vereinzelten Anteil der Innenseite (23 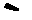 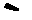 ) der Anschlußbänder (23) definiert wird. Die Regeneration erfolgt, indem zunächst die gesamte Filtereinheit, je eines Doppelwickels, vollständig auf eine Achse (4) und dann auf die andere Achse (4 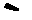 ) oder umgekehrt und schließlich in die dargestellte Ausgangsposition gewickelt wird. Dieser Vorgang kann für beide Doppelwickel gleichzeitig oder nacheinander ablaufen.

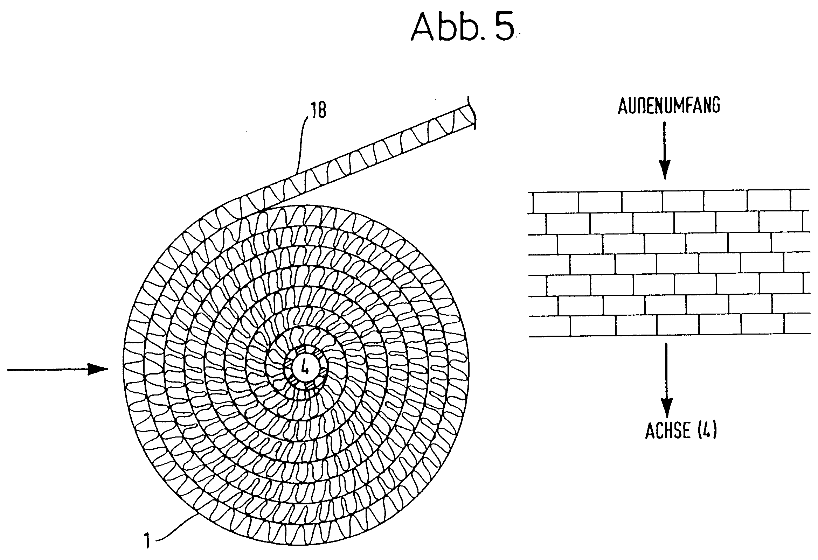

In der Abbildung 5 ist der Aufbau eines Wickels (1), der in Abbildung 4 dargestellten und oben beschriebenen Doppelwickel, vergrößert und die Abstufung in der Abscheidequalität des Separations- oder Filtermediums (18), vom Außenumfang zur Achse (4), schematisch dargestellt. Dabei besteht die Separations- oder Filtereinheit (18) aus einer Lage oder Schicht, die im gesamten Wickel (1) dieselbe Abscheidequalität besitzt. Eine weitere Variante wäre, daß die Abscheidequalität der einlagigen Separations- oder Filtereinheit (18) zur Achse (4) hin immer schärfer wird. Bei einer Strömungsrichtung von der Achse (4) zum Wickelumfang wären die Verhältnisse umgekehrt. Letzteres entspricht z.B. der Fluxrichtung in vielen Koaleszern. Die Abstufung in der Separations- oder Filtereinheit (18) kann durch spezielle Fertigungstechniken oder z.B. durch Verschweißen von Filterbahnen bzw. Bahnen von Separationsmedien (7, 7 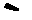 ) mit unterschiedlicher Abscheidequalität erreicht werden.

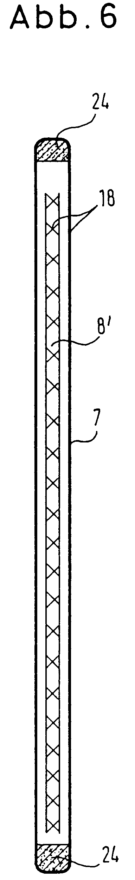

In bevorzugten Ausführungsformen ist die Separations- oder Filtereinheit (18) schlauchförmig ausgebildet. In Abb. 6 wird die Schlauchform dadurch erreicht, daß die offenen Kanten des Separationsmediums (7) über zwei Dichtzonen (24) aus z.B. einem flexiblen Dicht- oder Klebstoff, wie Silikon oder Polyurethan, miteinander verbunden sind. Die Separations- oder Filtereinheit (18) besteht aus dem Separationsmedium (7) und der Innendrainage (8 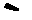 ). Die Innendrainage (8 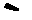 ) wird durch Gewebe oder Vliese mit offener Struktur gebildet.

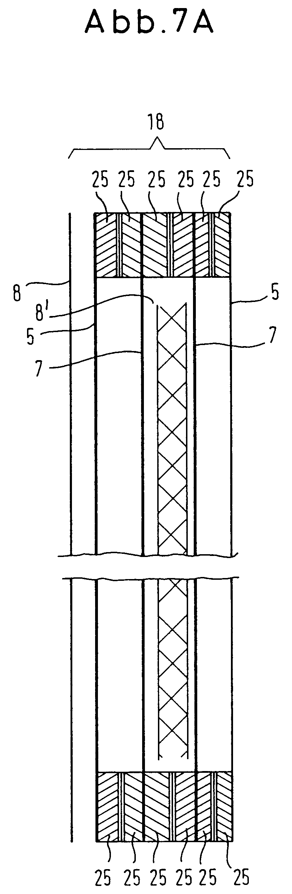

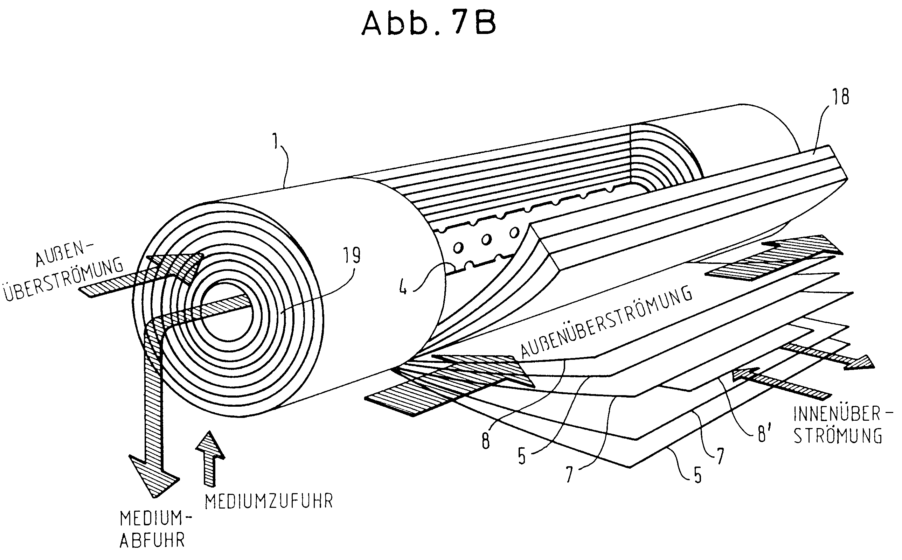

Eine Variante, Schläuche aus Separationsmedien (7) zu erzeugen, ist in der Abbildung 7A dargestellt. Der Separationsschlauch und damit die Trennung von Medienräumen wird hier durch das Zusammenpressen der Zonen mit Dichtelementen (25) verschiedener Flachmedien erzeugt. Das Zusammenpressen erfolgt durch den Wickelvorgang bzw. den dadurch erzeugten Druck in den Wickeln (1, 1 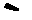 ), während bei der Umwicklung zur Regeneration einzelne Schichten zusätzlich vereinzelt werden können. Abbildung 7B zeigt eine perspektivische Ansicht eines Wickels (1) zur Verdeutlichung der Lagenfolge. Auf die Darstellung von Dichtelementen wurde dabei verzichtet.

Wie in den Abbildungen 7 gezeigt, besteht die Separations- oder Filtereinheit (18) aus 6 Lagen, dabei sind die Lagen (8) und (8 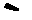 ) ohne Dichtelemente (25) die Außen- und die Innendrainage. Letztere ist in der Breite gekürzt, damit eine Randabdichtung der Lagen (7) über die Dichtelemente (25) möglich ist. Die Lagen oder Schichten (5) sind z.B. Vorfiltermaterialien, während die Lagen (7) das Hauptseparationsmedium darstellen. Letztere sind an den Rändern beidseitig mit Dichtelementen (25) versehen, die Schichten (5) einseitig. Im Separationszustand liegt z.B. eine Konfiguration wie in Abb. 3 vor, wobei die Achse (4 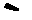 ) auch für die Medienabfuhr oder -zufuhr geeignet ist. Bei dieser Wickelvariante kann während des Separationsvorganges der aus den Schichten (5) und (7) gebildete Schlauch sowohl innen und außen von dem zu behandelnden Medium überströmt werden (vergl. Abb. 7B). Geschieht beides gleichzeitig, so wird der Vorgang als Dialyse bezeichnet. Bei einer einseitigen Überströmung, mit dem Ziel der Selbstreinigung bzw. Verhinderung einer Deckschichtbildung, spricht man vom Cross-Flow-Verfahren.

Bilden die Schichten (7) des Wickels (1) in der Abbildung 7B einen permanent abgedichteten Schlauch, so sind die oben beschriebenen Überströmungsvarianten sowohl im Separationszustand, als auch im Regenerationszustand möglich.

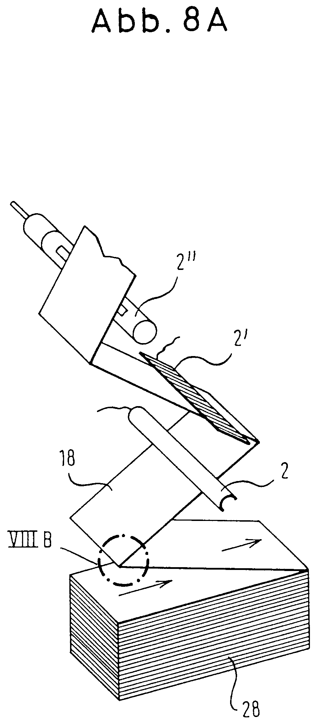

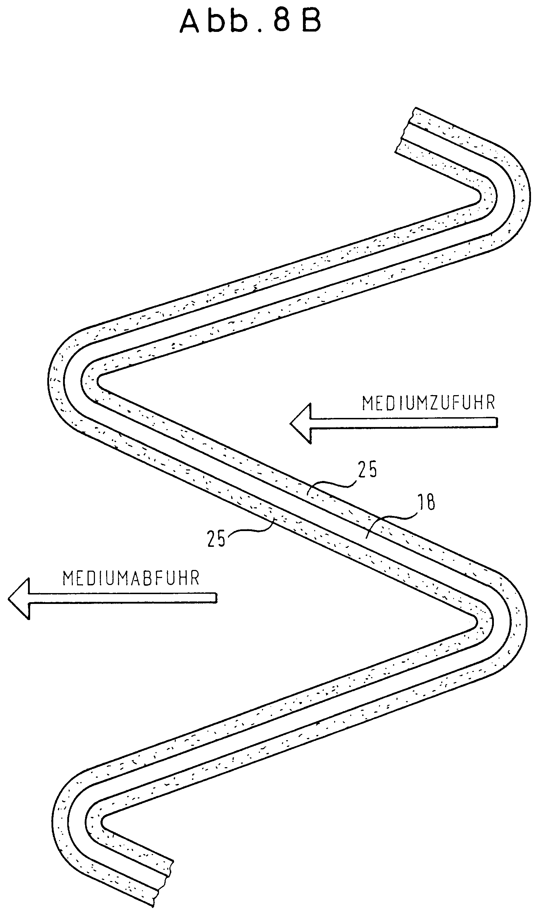

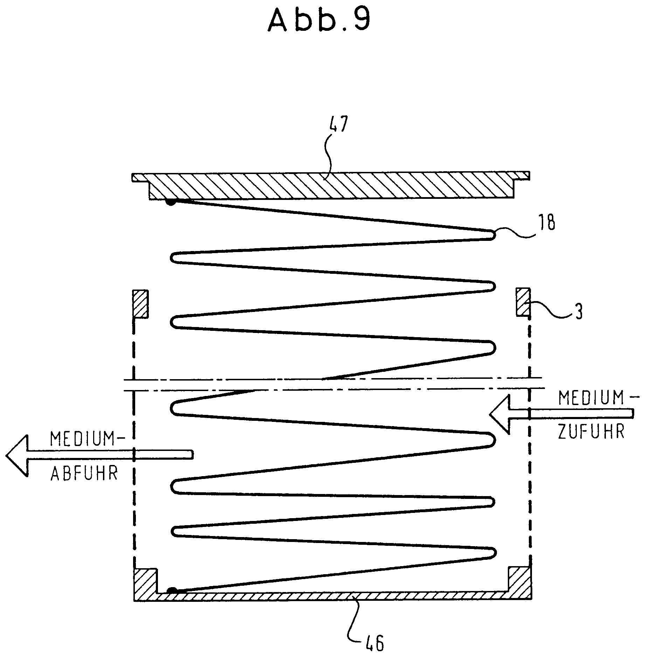

In den Abbildungen 8 und 9 wird ein erfindungsgemäßes Separationselement des Typs 2 gezeigt, bei dem die Separationseinheit (18) leporelloartig zu einem Faltenpaket (28) gefaltet ist. Beim Entfaltungs- bzw. Regenerationsvorgang kommt es zur Wechselwirkung mit den Regenerationseinheiten (2), (2 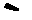 ) und (2 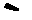 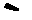 ). Abbildung 8B ist eine Vergrößerung des in Abb. 8A gekennzeichneten Ausschnittes im Randbereich des Faltenpakets (28). Im zusammengepreßten Zustand werden die Dichtelemente (25) gegeneinander gedrückt und die Medienräume über die Separations- oder Filtereinheit (18) getrennt. Abbildung 9 korrespondiert mit dem Anwendungsbeispiel 8 und wird dort näher beschrieben.

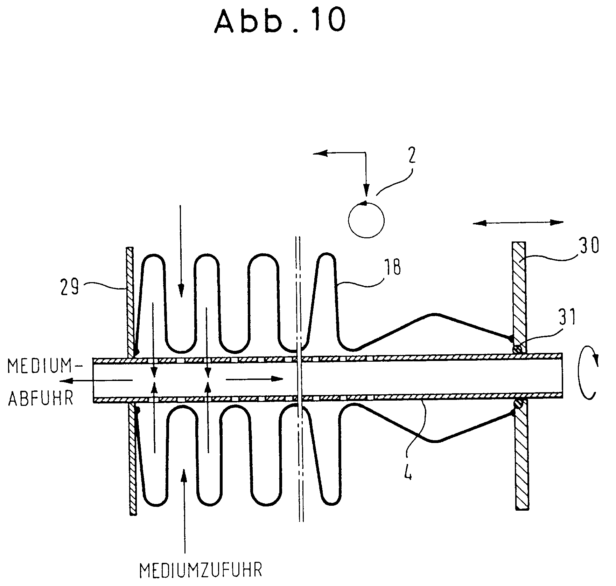

In der Abbildung 10 ist ein weiteres erfindungsgemäßes Separationselement des Typs 2 dargestellt. Dabei ist die Separations- oder Filtereinheit (18) balgartig auf der Achse (4) aufgefädelt. Eine Seite des Balgs ist leckdicht mit einer fixierten Endkappe (29) verbunden, die andere Seite mit einer beweglichen Endkappe (30), die durch das Achsenabdichtmedium (31) mit der Achse (4) so zusammenwirkt, daß sowohl während des Separationsvorganges, als auch während der Regeneration eine strikte Trennung der Medienräume möglich ist. In der Abbildung 10 ist durch Pfeile angedeutet, welche Bewegungen der Regenerationseinheit (2), der beweglichen Endkappe (30) und der Achse (4) möglich sind, um den Balg in eine regenerationskonforme Konfiguration zu bringen. Die Separations- oder Filtereinheit (18) besteht z.B. aus zwei Spunbond-Vliesen, die ein Meltblown-Vlies sandwichartig umgeben.

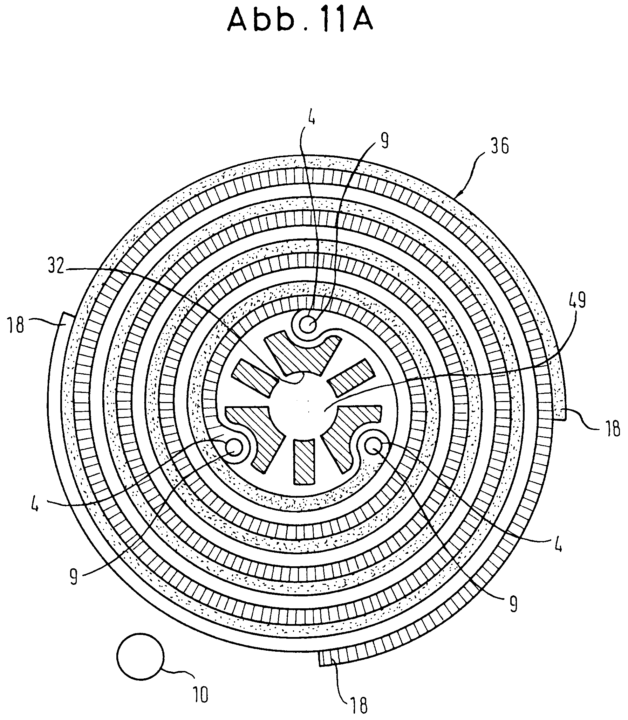

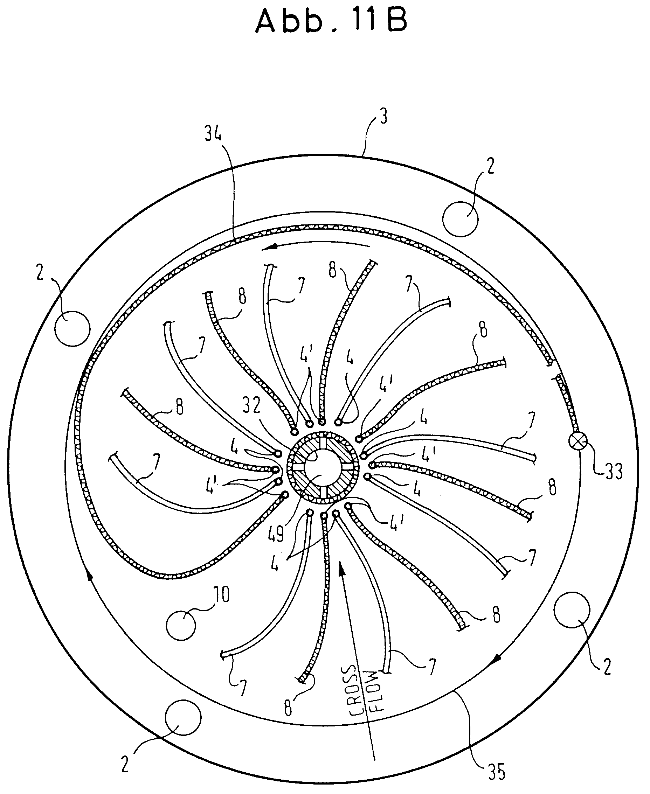

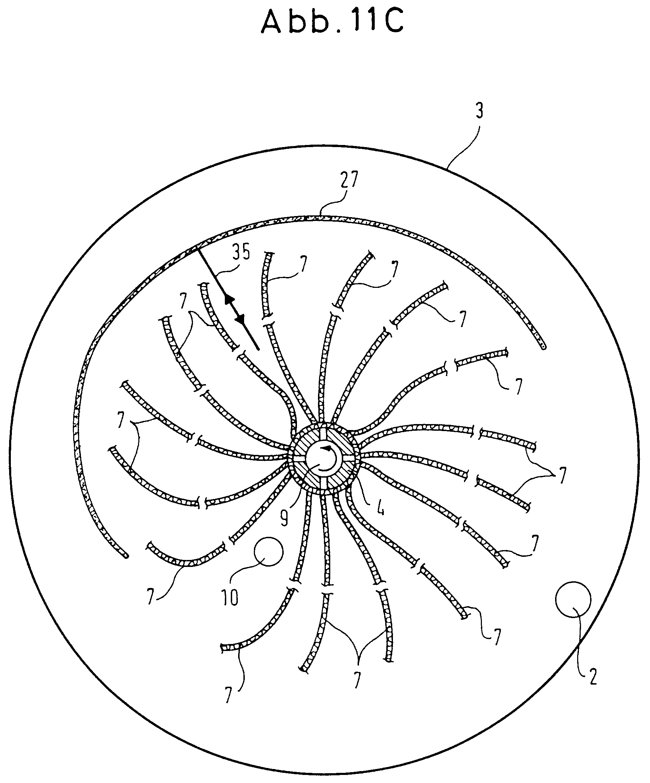

Die Abbildungen 11 zeigen erfindungsgemäße Separationselemente des Typs 3. Dabei ist in der Abbildung 11A der Spiralwickel (36) eines Separationselementes, das aus drei spiralnebelartig aufgewickelten Separations- oder Filtereinheiten (18) besteht, abgebildet. Die Separations- oder Filtereinheiten (18) enthalten z.B. abwechselnd Drainageschichten (8) und Lagen mit dem Separationsmedium (7) in Schlauchform . Die Separationsmedien (7) können crossflowartig überströmt werden. Das Unfiltrat, bzw. rezirkulierte Konzentrat, tritt über die Gehäuseöffnung (10) ein, überströmt die Separations- oder Filtereinheit (18) im Spiralwickel (36) und verläßt das Gehäuse (3) über die Konzentratachsenöffnung (49). Die Filtrate werden in Achsen (4) gesammelt, die mit ihrer Achsenöffnung (9) auf einem Achsenanschluß (12) befestigt sind, über dessen Achsenöffnung (9 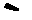 ) das gesammelte Filtrat abfließen kann. Der Achsenanschluß (12) mit der Achsenöffnung (9 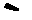 ) ist nicht abgebildet.

In Abbildung 11B sind zwei Möglichkeiten der Vereinzelung der Schichten eines Spiralwickels (36) skizziert. Hierzu ist eine der Außendrainagen (8), die an Achsen (4 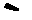 ) fixiert sind, zu einem langen Wickelband (34) verlängert. Die Länge entspricht mindestens 2 mal dem Wickelumfang im Separationszustand. Das Wickelband (34) ist fest mit der Fixierungsachse (33) verbunden. Soll das Separationselement aus dem Regenerationszustand in den Separationszustand übergeführt werden, so kann die Formung des kompakten Spiralwickels (36) dadurch bewirkt bzw. erreicht werden, daß die Achsen (4) und (4 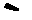 ), die mit dem Achsenanschluß (12) verbunden sind, gemeinsam eine Drehbewegung durchführen oder die Fixierache (33) in einer Führungsspur (35) in entgegengesetzter Richtung bewegt wird. Auch ist eine gleichzeitige Bewegung möglich. Die Vereinzelung erfolgt durch Umkehr der Bewegungsrichtung. Im Gehäuse (3) sind weiterhin 4 Regenerationseinheiten (2) positioniert.

Eine weitere Variante der Vereinzelung ist in Abbildung 11C dargestellt. Das Separationsmedium (7) sind z.B. Fasern, poröse Fasern oder Hohlfasern, die durch Oberflächenmodifikation als spezifische Adsorber einsetzbar sind. Die verkürzt gezeichneten Fasern sind an der Achse (4) fixiert. Das zu behandelnde Medium tritt über die Gehäuseöffnung (10) in das Gehäuse (3) ein und die Achsenöffnung (9) aus. Für die Separation ist es dabei von Vorteil, wenn das zu behandelnde Medium einen kompakten Spiralwickel (36) durchströmt. Für die Elution und die Regeneration hingegen sollen die Fasern bzw. Hohlfasern frei mit viel Elutionsmedium und Regenerationsmedium (21) in Kontakt sein. Die Regeneration wird ggf. durch eine zusätzliche Regenerationseinheit (2) unterstützt. Zur Bildung des Spiralwickels (36) dreht sich Achse (4) in der angegeben Richtung, während sich das mediumdurchlässige Vereinzelungsblech (27) in der Führungsspur (35) auf die Achse (4) zubewegt. Eine weitere nicht dargestellte Variante ist es, zwei oder mehr angepaßte, bewegliche und mediumdichte Vereinzelungsbleche (27) einzusetzen, die im Separationszustand einen dichten, inneren Gehäusezylinder bilden. Auf diese Weise kann der Adsorptionsvorgang mit wesentlich weniger Volumen, des zu behandelnden Mediums, erfolgen.

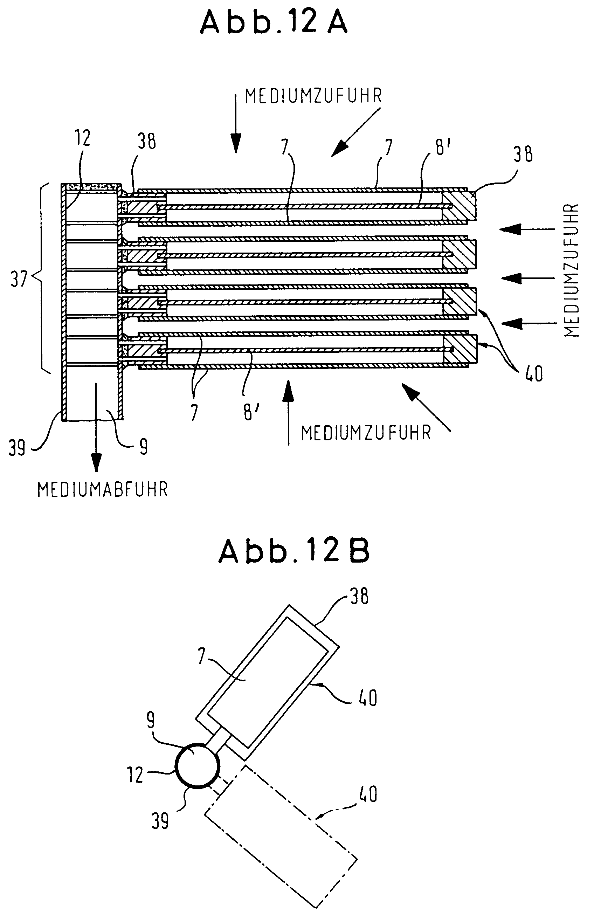

In der Abbildungen 12A ist ein erfindungsgemäßes Separationselement des Typs 4 dargestellt. Dabei sind Separations- oder Filtersegmente (40) an einer Drehachsenführungs- und Mediumsammelachse (39) über die Achsenanschlüsse (12) fixiert. Die Separations- oder Filtersegmente (40) bestehen z.B. aus den Separationsmedien (7), die auf einen Trägerrahmen (38) aufgeklebt oder aufgeschweißt sind. Die Separations- oder Filtersegmente (40) bilden zusammen mit den Achsenanschlüssen (12) und der Drehachsenführungs- und Mediumsammelachse (39) einen Segmentstapel (37). In Abbildung 12B ist schematisch dargestellt, wie ein Separations- oder Filtersegment (40) zur Regeneration aus dem Segmentstapel (37) ausgelenkt weren kann. Bei einer weiteren, nicht dargestellten, Variante eines Segmentstapels (37) ist die Drehachse (4) ein flexibler Schlauch ist, der gleichzeitig die Funktion der Mediumsammelachse übernimmt und ohne Lösung von Fixierungen um 45 bis 180 Grad drehbar ist.

Als Separationsmaterialien kommen fadenförmige, faserförmige, flächige, hohlfaserförmige, schlauchförmige oder rohrförmige, oberflächenaktive und oder poröse Stoffen aus der Gruppe der Feinstfasern, Spunbond-Vliese, trocken und naßgelegten Papiere und Vliese, Splitfiber-Vliese, Feinstfaser-Vliese und -Papiere, Mikrofilter, Ultrafilter, Reverse Osmose Membranen, Pervaporations Membranen und Folien in Frage, an die, in denen oder zwischen denen adsorptiv, katalytisch, biokatalytisch, über ein Zetapotential oder durch Elektretcharakter wirkende Stoffe oder zum Ionenaustausch fähige funktionelle Gruppen oder Medien gebunden, fixiert oder eingelagert sein können.

In den erfindungsgemäßen Separationselementen (Typ 1 bis 4) können diese Separationsmaterialien in einem Separationsmedium (7) allein wirken oder miteinander kombiniert werden. So lassen sich z.B. Hohlfasern mit hydrophoben und hydrophilen Charakter nebeneinander an einer Achse (4, 4 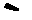 ) fixieren oder flächige Separationsmaterialien der Feinfiltration mit integrierten, adsorptiv wirkenden Stoffen (Kieselgur, Aktivkohle, metallische oder biologische Katalysatoren ...), mit hohlfaserförmigen oder flächigen Mikrofiltermembranen kombinieren.

Enthält eine Separations- oder Filtereinheit (18) mehrere Schichten eines oder verschiedener Separationsmedien (7, 7 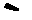 ) so erlauben bevorzugte, erfindungsgemäße Ausführungsformen, daß die Separationsmedien (7, 7 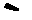 ) zur Regeneration getrennt und mit einer lagenspezifischen Regenerationsmethode regeneriert werden können.

Separationselemente der erfindungsgemäßen Art können für zahlreiche Anwendungen im Bereich der Haushaltstechnik, Pharmazie, Atomtechnologie, Biotechnologie, Lebensmitteltechnologie, Halbleitertechnologie, Umwelttechnik, chemischen Industrie und anderen Gebieten (Schiffe, Insellagen usw.) vorteilhaft eingesetzt werden.

Dabei ist es unerheblich, ob es sich um gasförmige oder flüssige Medien handelt, solange eine mehrfache Regeneration wirtschaftliche, umweltrelevante oder andere Vorteile bietet. Die erfindungsgemäßen Separationselemente können spezifisch auf das jeweilige Separations- und oder Regenerationsproblem abgestimmt bzw. dafür angepaßt oder optimiert werden.

Insbesondere erlauben es die erfindungsgemäßen Separationselemente auch, daß bereits etablierte Anwendungen für Feinfilter, Mikrofilter, Ultrafilter und Reverse Osmose Filter, durch die mehrfache Einsetzbarkeit, wirtschaftlicher werden und die heute im hohen Maß anfallende Zahl an verblockten Separationselementen entscheidend reduziert werden kann.

Im Bereich der Feinfiltration für Gase werden z.B. in Belüftungsanlagen für Gebäude oder KFZ-Innenräumen, Filtermedien mit Elektretcharakter eingesetzt, die in der Regel aus gespleisten Folien (Splitfiber), aus in einem elektrischen Feld aus einer Polymerlösung gesponnenen Fasern oder nach dem sog. Meltblown-Verfahren und Meltspinning-Verfahren erzeugt werden. Diese Art von Filter haben eine hohe Rückhalteeffizienz, weil in den Fasern elektrische Ladungen "eingefroren" sind, welche elektrische Felder erzeugen, die die Filtereffizienz entscheidend verbessern. Da die Permanenz der Ladung, aber durch lange und hohe Temperatureinwirkung, Feuchtigkeitsschwankungen, Wechselwirkung mit Lösungsmitteldämpfen oder dergleichen beinträchtigt werden kann, wäre eine regelmäßige Ladungsauffrischung (Regeneration) von Vorteil. Dies erfordert aber die direkte Wechselwirkung mit einer Korona. Die erfindungsgemäßen Separationselemente erlauben eine solche Wechselwirkung. Mit dem Auffrischungsvorgang kann z.B. eine Abreinigung (ggf. nach vorheriger, vollkommener Entladung) der zurückgehaltenen Stoffe und oder eine Sterilisation gekoppelt werden (vergleiche Anwendungsbeispiel 8).

Bei der Feinfiltration von Flüssigkeiten (Getränke, Brauchwasser, Chemikalien, Kosmetika, pharmazeutische Produkte usw.) finden heute Wickelkerzen aus Meltblown-Vliesen zunehmend an Bedeutung. Dabei ist die Wickelbahn häufig so aufgebaut, daß sie kontinuierlich oder abschnittsweise unterschiedliche Abscheidequalität hat (von grob nach fein oder umgekehrt, aber auch von grob nach fein, nach grob). Im Wickel mit 40 bis 80 Wickelschichten liegen meist mehrere Schichten gleicher oder ähnlicher Abscheidequalität übereinander. Verblockt nur eine der Schichten irreversibel, so muß bei den bekannten Systemen das Filterelement verworfen werden. Die erfindungsgemäßen Separationselemente erlauben es, durch geeignete Vorrichtungen (z.B. Durchflußmessung) den verblockten Bereich zu identifizieren und z.B. mittels Ultraschall zu reinigen bzw. zu regenerieren (vergleiche Anwendungsbeispiel 3).

Die Kaltsterilisation mit Mikrofiltern ist bei der Herstellung von Pharmazeutika und Lebensmitteln und insbesondere auch bei Getränken, wie Wein oder Mineralwasser Stand der Technik, während z.B. die Anwendung bei Bier noch nicht wirtschaftlich ist. Dies insbesondere dann, wenn das Bier nach dem Deutschen Reinheitsgebot gebraut wurde und die zur Sterilisation optimale Porengröße von 0,45 µm verwendet wird. Die erfindungsgemäßen Separationselemente erlauben auch hier eine wirtschaftlichere und breitere Anwendung (vergleiche Anwendungsbeispiel 1).

Ein breites Anwendungsgebiet ist heute auch die Aufarbeitung von Milch oder Molke mit Ultra- und Mikrofiltern. Das dabei beobachtete irreversible Membranfouling läßt sich ähnlich wie bei der Trinkwassergewinnung mittels Reverse Osmose Membranen oder bei der Entalkoholisierung von Bier und anderen alkoholischen Getränken mittels Pervaporationsmembranen, durch eine spezifische Wechselwirkung zwischen der Mebranoberfläche und Regenerationseinheiten und oder Regenerationsmedien, wie sie die erfindungsgemäßen Separationselemente erlauben, verhindern bzw. entscheidend verzögern (vergleiche Anwendungsbeispiel 5).

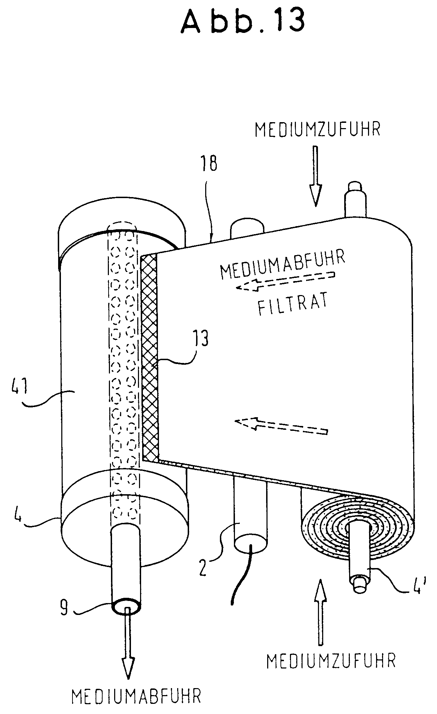

Bei spezifischen Ausführungsformen von Separationselementen des Typs 1 und 3, ist die Achse (4) oder (4 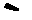 ) eine, dem Stand der Technik entsprechende, plissierte, gewickelte oder gestapelte Filterkerze oder eine Hohlfaserfilterkerze. In Abbildung 13 ist diese Variante perspektivisch dargestellt. Bei Mikrofiltern kann z.B. die Abscheidequalität dieser Kerze gleich, grober oder feiner sein, wie die der damit verbundenen Separations- oder Filtereinheit (18). Die Notwendigkeit oder Vorteilhaftigkeit für einen solchen Aufbau ist mit Sicherheitsaspekten (Doppelfiltration) und einer sichereren Integritätsprüfung (bessere Prüfbarkeit des Achsenfilters auf Grund der Abdichtung, der permanenten Hydrophilie, der kleineren Fläche usw.) begründbar. Aus Abbildung 13 ist weiterhin zu entnehmen, daß die Kerze bzw. Achse (4), bis auf die Zone der Achsenanbindung (13), geschlossen sein muß, damit sie nur mit vorsepariertem oder vorfiltriertem Medium in Kontakt kommt. Hierzu muß die Kerzenummantelung (41) z.B. eine mediumdichte Folie bzw. ein mediumdichter Beutel oder ein mediumdichtes Gehäuseteil sein.

In den erfindungsgemäßen Separationselementen vom Typ 1 bis 4 können die Separationsmedien (7, 7 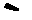 ) anwendungsbezogen oder konfigurationsbedingt mit Schutz- oder Drainageelementen (8, 8 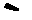 ) versehen oder kombiniert werden, die natürlich die Konfigurationsänderung nicht behindern dürfen und im Optimalfall die Konfigurationsänderung erleichtern. Schutzelemente dienen unter anderem dazu, mechanische Verletzungen des Separationsmediums (7) zu verhindern. Diese können durch direkte Berührung oder durch Vibrationen, Pulsationen, Druckschläge, Druckrückschläge usw. erfolgen. Solche Schutzelemente sind z.B. Spunbond- oder andere Vliese, Kunststoffgewebe (gewoben oder extrudiert), Folien, Drahtgewebe oder dergleichen, die in Anpassung an die Anwendung geprägt, rilliert, genoppt, gelocht, verstärkt, strukturiert usw. sein können. Häufig dienen diese Schutzelemente zumindest auf einer Seite des Separationsmediums (7, 7 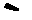 ) gleichzeitig als Drainageelement (8, 8 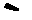 ).

Drainageelemente (8, 8 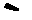 ) sorgen dafür, daß das zu behandelnde Medium in geeigneter Weise den Separationsmedien (7, 7 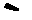 ) zugeführt oder an ihnen vorbeigeführt (Überströmung) wird, das es gezielt durchströmt wird und bei einem Filtrationsvorgang das Filtrat optimal abgeführt werden kann.

Besondere Varianten an Dichtelementen (25) sind die Verwendung von bzw. die Beschichtung mit geeigneten Haftklebern bzw. Haftschmelzklebern oder magnetisch wirksamen Substanzen.

Für den Separationsmodus und für den Regenerationsmodus ist es anwendungsbezogen von entscheidender Bedeutung ist, wie das zu behandelnde Medium oder andere Hilfsmedien den Separationsmedien (7, 7 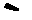 ) zugeführt oder von ihnen abgeführt werden, d.h. wie lang die Wege und Kontaktzeiten sind, ob eine Durch-, Um- oder Überströmung erfolgt, wie die Turbulenz oder Geschwindigkeit in der Grenzschicht ist usw..

Der Begriff Überströmung bzw. Cross-Flow wird dabei nicht ausschließlich im Sinne einer Selbstreinigung durch schnelle Überströmung gebraucht. Langsamere Überströmungen sorgen bereits dafür, daß es bei hoher Feststoffkonzentration nicht zu einem Absetzen bzw. einer Filterkuchenbildung kommt, daß bei Chromatographieprozessen eine vollständige Elution möglich ist, daß eine Konzentrationspolarisation auf oder in Nähe der Oberfläche des Separationsmediums verhindert wird oder das ein Medium, das über das Separationselement aus einer Kreisleitung entnommen wird, auch bei Separations- oder Filtrationsunterbrechungen immer im chemischen und physikalischen Gleichgewicht bleibt.

Für viele Anwendungen ist es weiterhin vom besonderer Bedeutung, daß die Medienräume, zumindest während der Separation hermetisch voneinander getrennt sind. Für manche Anwendungen kann es von Vorteil sein, wenn die Trennung der Medienräume auch während der Regeneration bestehen bleibt, um z.B. die Gefahr einer Sekundärkontaminierung der Filtratseite generell zu verhindern.

Für kontinuierliche Prozesse ist es weiter wichtig, daß zur Regeneration der Separationsprozeß nicht unterbrochen werden muß, d.h. auch während der Konfigurationsänderung müssen die Medienräume strikt getrennt bleiben und eine Wechselwirkung des Separationsmediums (7) mit der Regenerationseinheit (2), z.B. durch Abbürsten oder Abtupfen der Oberfläche, möglich sein, ohne daß der Separationsvorgang unterbrochen werden muß.

Die erfindungsgemäßen Separationselemente liegen im Separationszustand in dicht gepackter, gestapelter, gewickelter oder gefalteter Form vor, um in der Volumeneinheit eine optimale separationswirksame Medienfläche (bzw. Medienvolumen) unterbringen zu können, um ggf. die notwendige Dichtwirkung zu erreichen, um das System kompakt und stabil für den Separationsprozeß zu bekommen und um das Totvolumen und die Gehäusegröße zu minimieren.

Ist für die Regeneration ein direkter Kontakt nötig bzw. erfordert diese eine freie Oberfläche der Separationsmedien (7, 7 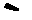 ), so muß es die Konstruktion des Separationselements erlauben, daß Drainage- und oder Schutzelemente (8 , 8 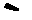 ) während des Regenerationsvorgangs von den Separationsmedien (7, 7 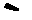 ) bzw. der Separations- oder Filtereinheit (18) getrennt werden können. Dies ist bei diversen Bauformen der erfindungsgemäßen Separationselemente ohne großen Aufwand realisierbar.

Als Regenerationsmethoden kommen alle anwendungsspezifischen, physikalisch und chemische Methoden in Betracht, die eine direkte Wechselwirkung mit der Separations- oder Filtereinheit (18) oder dem Separationsmedium (7, 7 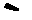 ) erlauben.

Zwischen folgenden Fällen kann unterschieden werden:
1) Für die Regeneration ist der Kontakt mit mindestens einem Regenerationsmedium (21) nötig.
2) Zur Regeneration ist die direkte Wechselwirkung mit mindestens einer Regenerationseinheit (2, 2 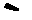 , 2 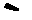 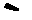 ..) nötig.
3) Die Regeneration erfordert das Zusammenwirken mindestens einer Regenerationseinheit (2, 2 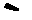 , 2 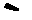 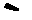 ..) mit mindestens einem Regenerationsmedium (21).

Gemäß Fall 1 können z.B. auf verschiedenen Abschnitten eines Wickels (1, 1 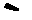 ) aus flächigen oder faserförmigen Separationsmedien (7, 7 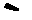 ) saure und basiche Ionenaustauschgruppen fixiert sein, die gemäß der erfindungsgemäß möglichen Konfigurationsänderung, Abschnitt für Abschnitt mit dem jeweils spezifischen Regenerationsmedium (21) in Kontakt gebracht werden können (vergl. Abbildung 2).

Gemäß Fall 2 lassen sich auf definierte Bereiche einer Separations- oder Filtereinheit (18) z.B. katalytisch bzw. biokatalytisch aktive Substanzen durch Auftupfen oder Aufsprühen applizieren oder ein fester Niederschlag von der Oberfläche eines Separationsmediums (7, 7 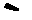 ) abschaben.

Die Regeneration mit Ultraschall ist ein Beispiel für Fall 3. Dabei stellt der Ultraschallgeber die Regenerationseinheit (2) und Wasser bzw. eine andere geeignete Flüssigkeit das Regenerationsmedium (21) dar, in dem sich die reinigungswirksamen Kavitationsbläschen bilden.

Für die Regeneration oder Reinigung werden Methoden bevorzugt, die mechanisch, physikalisch-chemisch oder chemisch auf begrenzte bzw. definierte Bereiche wirken können. Beispiele sind die Bestrahlung mit Mikrowellen,IR-, UV-, Elektronenstrahlen usw., das Trocknen bzw. Ausheizen, das Aufheben von Konzentrationspolarisationen, das Rücklösen, das Abschwemmen, Abbürsten, Abtupfen, Abschaben, das Absprühen oder Durchströmen mit Hochdruck, das Ab- oder Durchblasen mit Luft, Druckluft und anderen Gasen, das Aufsprühen, Aufstreichen, flächige oder rastermäßige Auftragen von Medien, gerichtete Druckstöße oder Vibrationen, die Beaufschlagung mit Ultraschall, Plasmabehandlungen, Koronabehandlungen, gerichtete magnetische oder elektrische Felder usw..

Eine wirtschaftliche Kaltsterilisation von Bier und anderen Medien mit denaturierbaren Inhaltsstoffen mittels Mikrofiltermembranen ist mit den erfindungsgemäßen Separationselementen z.B. deshalb möglich, weil die Konfigurationsänderung eine gezielte Denaturierung der Verblockungsschicht erlaubt, die diese in eine Konsistenz überführt, die eine Abreinigung durch eine direkt wirkende Ultraschallbehandlung ermöglicht.

Um die geeignete Konsistenz zur Abreinigung zu erreichen, kann es anwendungsspezifisch von Vorteil sein, wenn dem zu behandelnden Medium während der Separation inerte Partikel zudosiert werden oder auf eine heute übliche Vorfiltration verzichtet wird. Beispielsweise kann und sollte bei der Kaltsterilisation von Bier eine Schichtenfiltration vor der Mikrofiltrationsstufe entfallen.

Die erfindungsgemäßen Separationselemente erlauben also auch das Zusammenfassen oder Entfallen von Separationsschritten. Weiterhin können die meisten Separationsprobleme, die heute nur mit der aufwendigen Cross-Flow-Technik lösbar sind, schonender und mit einem wesentlich geringerem Energieaufwand, durch den Einsatz der erfindungsgemäßen, regenerierbaren Separationselemente, in Kombination mit geeigneten Regenerationsmethoden, gelöst werden.

Für eine prozeßgerechte Separation ist es von Vorteil, wenn die Separationselemente zumindest während des Separationsprozesses in einem geschlossenem Gehäuse (3) mit mindestens zwei Anschlüssen (9, 10, 11, 15, 16) für die Medienabfuhr bzw. -zufuhr oder die Ent- und Belüftung, betrieben werden. Dadurch können Produktverluste minimiert werden, eine Sterilisation (Heißwasser, Heißdampf, Trockenhitze usw.) ist möglich, Überströmungseffekte sind relisierbar, es kann bei hohen Betriebsdrücken gearbeitet werden, eine saubere Restentleerung kann sichergestellt werden, luftempfindliche oder umweltgefährtende Medien können sicher aufgearbeitet werden usw..

Für eine "on line" oder "in place" Regeneration müssen im oder am Gehäuse (3) Vorrichtungen vorhanden sein, die es erlauben, die Konfigurationsänderung ohne Öffnen des Gehäuses durchzuführen. Diese Konfigurationsänderung kann schrittweise oder kontinuierlich erfolgen. Ist eine Wechselwirkung mit einer oder mehreren Regenerationseinheiten (2, 2 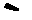 , 2 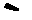 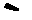 ..) nötig, so muß oder müssen diese ebenfalls ohne Öffnung des Gehäuses aktiviert werden können.

Ist zur Regeneration eine direkte Wechselwirkung mit einer Regenerationseinheit (2, 2 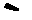 , 2 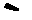 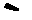 ..) nötig, so kann sich die Separations- oder Filtereinheit (18) bzw. ein Separationsmedium (7, 7 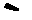 ) während der oder zur Regeneration an der Regenerationeinheit vorbeibewegen oder umgekehrt. Auch ist eine gleichzeitige Bewegung von Separationsmedium und Regenerationseinheit denkbar.

Regenerationseinheiten (2, 2 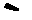 , 2 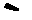 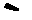 ..) können weiterhin gleichzeitig oder nacheinander für verschiedene Separationselemente wirksam sein. Ultraschallschwinger, die nur nach einer Seite abstrahlen, können z.B. durch schrittweise Drehung um eine Achse nacheinander mit den Separationsmedien (7, 7 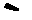 ) verschiedener Separationselemente in Wechselwirkung treten. Auch können mehrere gleiche oder verschiedene Regenerationseinheiten gleichzeitig oder nacheinander mit dem Separationsmedium (7, 7 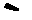 ) eines Separationselementes wechselwirken.

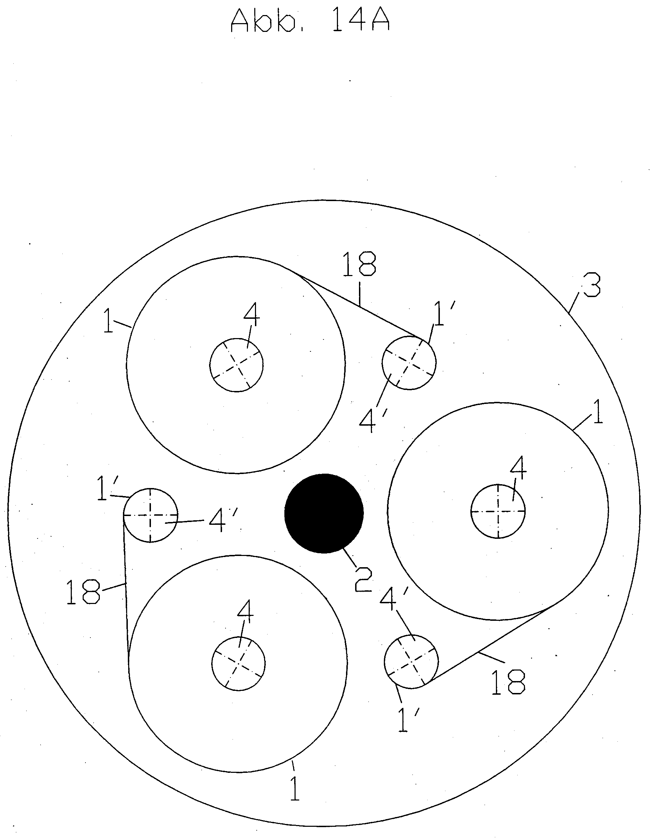

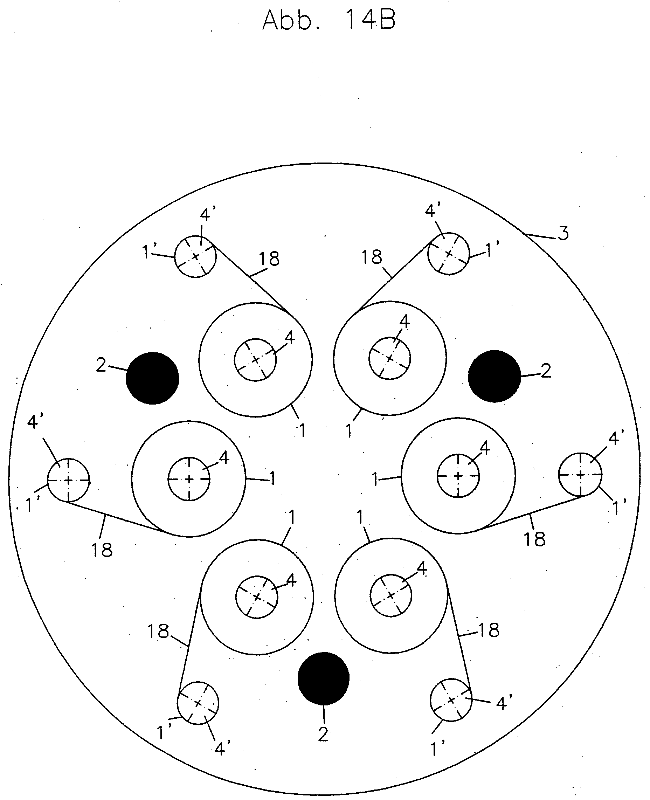

Bevorzugte Anordnungen von Separationselementen des Typs 1 und Regenerationseinheiten (2), insbesondere Ultraschallrohrresonatoren, sind in Abbildung 14A und 14B dargestellt. In Abbildung 14A wirkt eine Ultraschalleinheit (2) gleichzeitig auf beide Seiten der Separations- oder Filtereinheiten (18) von drei erfindungsgemäßen Separationselementen, die als Doppelwickel (1, 1 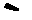 ) dargestellt sind. In Abbildung 14B sind es drei Paare aus Doppelwickeln (1, 1 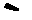 ), die jeweils mit einer Regenerationseineit (2) wechselwirken. Für größere Gehäuse ist eine Kombination aus beiden Anordnungen sinnvoll, wobei die Anordnung in Abbilung 14A das Zentrum des Gehäuses bildet und die Zahl der Außenpaare, dem zur Verfügung stehenden Raum oder der erforderlichen Separationsleistung angepaßt wird.

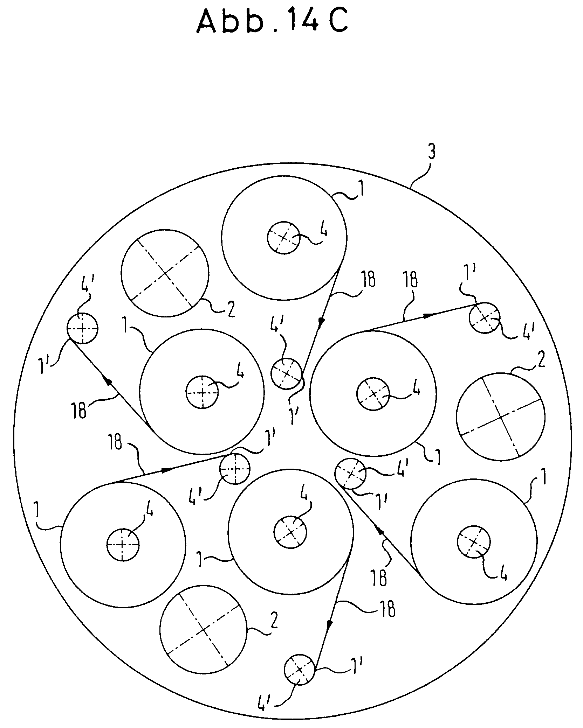

Vorteilhaft ist auch die in Abb. 14C dargestellte Anordnung der Einzelwickel (1, 1 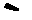 ) der 6 Separationselmente. Durch die gegenläufige Lage kann so das Volumen (Totvolumen) bzw. die Größe des Gehäuses (3) reduziert werden.

Insbesondere erfindungsgemäße Separationselemente vom Typ 1, die zwei Achsen (4, 4 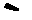 ) haben, über die Medium zu- oder abgeführt werden kann und die je mit einem Absperrventil korrespondieren, haben neben dem Vorteil, daß so eine Separation nach dem Dialyseprinzip möglich ist, eine Reihe von anderen, wesentlichen Vorteilen. So kann die aktive Separationsfläche in einem Gehäuse (vergleiche die Abbildungen 14) durch Zu- oder Abschalten einzelner Separationselemente bzw. Doppelwickel (1, 1 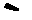 ) dem tatsächlichen Bedarf angepaßt werden. Der Bedarf ergibt sich z.B. aus der stark schwankenden Filtrierbarkeit von biotechnologischen Medien, wie Bier, die mit Mikrofiltern kaltsterilisiert werden sollen, aus dem Verblockungsgrad bzw. Restverblockungsgrad (nach erfolgter Regeneration) eines Separationsmediums (7, 7 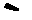 ) oder steuerungstechnisch optimalen Verhältnissen zwischen Betriebsdruck und Filtratleistung. Auch die Entleerung der Separationsanlage wird variabler, schonender und schneller. Defekte Separationselemente lassen sich abschalten und eine Einzelüberprüfung von Separationselementen wird möglich.

Es ist auch möglich, daß erfindungsgemäße Separationselemente und heute bekannte Elemente in einem Gehäuse in Serie betrieben werden, um z.B. Gehäuse zu sparen. Das Standardelement kann dabei z.B. als Sicherheitselement oder als Prüfelement mit optimierter Filterfläche dem erfindungsgemäßen Separationselement nachgeschaltet sein. Ein Spezialfall ist die vorne beschriebene Variante (Abbildung 13), bei dem das Standardelement gleichzeitig Fixier- oder Drehachse (4) ist.

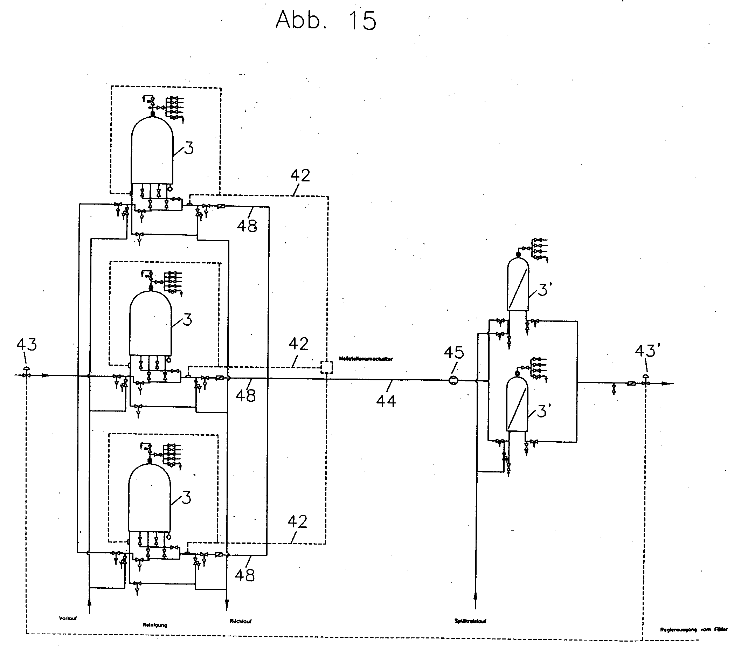

Ein Anlagenschema für einen kontinuierlichen Prozeß ist in Abbildung 15 dargestellt. Dieses Anlagenschema wird im Anwendungsbeispiel 1 beschrieben. Kontinuierlich arbeitende Anlagen, d.h. Anlagen die zum Regenerationsschritt nicht abgeschaltet werden müssen, bestehen z.B. aus zwei oder mehr Separationslinien (27) mit Gehäusen (3), in denen jeweils erfindungsgemäße Separationselemente betrieben werden, wobei mindestens immer eine Linie (27) im Separationszustand arbeitet, während sich die anderen Linien im Regenerationszustand oder im "stand by" Zustand befinden. Durch ein solches Konzept läßt sich die Flexibilität, auf die schwankende Filtrierbarkeiten von Medien zu reagieren, weiter verbessern. Jede Linie (27) ist mit separaten Vorrichtungen (Regenerationsmedienkreislauf (41)) für die Zu- und Abfuhr von Regenerationsmedien (21) versehen, so daß die erfindungsgemäßen Separationselemente dieser Linie, im abgekoppelten Zustand, "in place" gereinigt werden können. Insgesamt ist immer nur die Fläche oder Masse aktiv, die zur Aufrechterhaltung der gewünschten Separationsleistung nötig ist, während eine mindest ebenso große Fläche oder Masse vom Separationsvorgang unbelastet in Reserve steht bzw. durch eine parallel laufende Regeneration, bis zur Erschöpfung der separationsaktiven Stufe, wieder separationsbereit ist.

Mit Anwendungsbeispielen für den Brauereibereich soll exemplarisch verdeutlicht werden, welches Verbesserungspotential durch die erfindungsgemäßen Separationselemente gegeben ist und welche Anwendungsbreite damit erschlossen werden kann.

Die Ausführungen lassen sich auf viele Separationsprobleme in anderen Industriebereichen übertragen.

### Beispiel 1: Mikrofilteranlage zur Kaltserilisation von Bier

Anhand der Kaltsterilisation von Bier mittels Mikrofiltermembranen, sollen erfindungsgemäße Ausführungsformen der Separationselemente, deren Zusammenwirken mit Regenerationseinheiten (2) und eine Anlage in der sie betrieben werden können, näher beschrieben werden.

Dabei ist das Separationsmedium (7) ein Mikrofilter- oder Membranfilterschlauch und die Regenerationseinheit (2) ein Ultraschallgeber bzw. ein Ultraschallresonator.

Abb. 15 zeigt das Flußdiagramm für eine Anlage mit einer Füllerleistung von 40 bis 330 hl/h. In die Anlage gelangt Bier, daß durch eine vorherige Kieselgurfiltration und ggf. zusätzliche Schichtenfiltration weitgehend frei ist von Partikeln mit einem Durchmesser größer als 1µ. Die Mikrofilteranlage steht direkt vor dem Füller. Vor dem Füller und vor der Anlage sind korrespondierende Ventile (43, 43 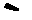 )) angebracht, durch die Druckschläge bzw. Druckrückschläge in den Rohrleitungen der Mikrofiltrationseinheit vermieden werden können.

Der Kern der Anlage besteht aus 3 baugleichen, parallel geschalteten Separationslinien (48) mit je einem Gehäuse (3). Jedes Gehäuse ist unabhängig von den Rohrleitungen für Bier mit Vorrichtungen versehen (Regenerationsmediumkreislauf (42)), die es erlauben das Gehäuse (3) mit Druckluft, Kohlendioxid oder anderen Gasen zu beaufschlagen, wie es z.B. zum Vorspannen, Entleeren, Trocknen oder zur Integritätsprüfung erforderlich ist sowie die Gehäuse (3) mit flüssigen Medien (21), die z.B. zur Reinigung oder zur Sterilisation benötigt werden, zu versorgen bzw. diese Medien auszutragen oder im Kreislauf rezirkulieren zu lassen.

In der Filtratsammelleitung (44) ist zur Datenerfassung für die Anlagensteuerung ein Durchflußmesser (45) eingebaut. Es sind weitere, nicht näher gekennzeichnete Vorrichtungen installiert, mit denen permanent der Differenzdruck zwischen dem Filtrat- und Unfiltratraum einer Separationslinie (48) ermittelt werden kann.

Als Option können vor dem Füller z.B. ein oder mehrere parallel geschaltete Filtergehäuse (3 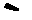 ) mit Standardfilterelementen oder erfindungsgemäßen, regenerierbaren Separationselementen z.B. gleicher Abscheidequalität, als Polizei- oder Integritätsfilter installiert werden.

Die Anordnung der Separationselemente und Regenerationseinheiten (2) in den Gehäusen (3) der Hauptlinien (48) entspricht Abbildung 14A. Demnach enthält es 6 regenerierbare Separationselemente in Doppelwickelform (1, 1 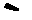 ) und 3 Regenerationseinheiten (2). In Abhängigkeit von der Anwendung sind analoge Anordnungen mit mehr oder weniger Separationselementen bzw. Regenerationseinheiten denkbar. Die als Regenerationseinheiten (2) eingesetzten Ultraschallrohrresonatoren sind so zwischen den regenerierbaren Separationselementen angebracht, daß in der Regenerationsphase eine optimale Reinigung der erfindungsgemäß umwickelbaren Separations- oder Filtereinheiten (18) bzw. Separationsmedien (7, 7 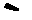 ) erfolgen kann.

Über eine oder beide Achsen (4, 4 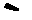 ) des Separationselementes kann Medium vom Separationselement abgeführt oder dem Separationselement zugeführt werden. Für Steuerungszwecke kann der Abfluß von den, bzw. der Zufluß zu den Achsen (4, 4 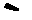 ) des Separationselements durch je ein Ventil gesperrt werden.

Die Achsen (4, 4 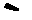 ) der Separationselemente können, wie für die Abbildung 1 beschrieben, über Achsenanschlüsse (12, 12 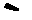 ) am Gehäuseboden, gedreht werden, so daß erfindungsgemäß jedes Separationselement in die für die Regeneration oder Separation optimale Konfiguration gebracht werden kann.

Die Filterfläche eines Moduls beträgt pro 10 Inch Bauhöhe vorzugsweise zwischen 0,25 und 1,5 m². Dies entspricht einer Länge von 0,5 bis 3 Metern für einen doppelseitig filtrierenden Mikrofilterschlauch. Der Durchmesser für einen Wickel (1) mit 1 m² eines Mikrofilterschlauches beträgt ca. 60 bis 150 mm.

Sind alle 6 regenerierbaren Separationselemente installiert, so erlauben die Steuerungsvorrichtungen, z.B. für Separationselemente mit 3 m² Filterfläche und 75 cm Bauhöhe, den Einsatz von 3 bis 18 m² Filterfläche pro Gehäuse bzw. Linie. Für eine frische 0,45 µ Membran und Bier durchschnittlicher Viskosität können bei einem Differenzdruck von 1 bar ca. 200 bis 1250 hl/h dem Füller zur Verfügung gestellt werden. Somit kann mit einem Gehäuse z.B. eine Sollfüllerleistung von 250 hl/h bis zu einem Verblockunggrad von 80 % bei konstantem Druck aufrecht erhalten werden.

Zur Regeneration wird das Bier mittels Kohlendioxid ausgeschoben und das Gehäuse mit warmen Wasser gefüllt. Anschließend wird jedes Separationselement einzeln oder mehrere oder alle gemeinsam über Antriebe am Gehäuseboden, die die Achsenanschlüsse (12) oder (12 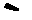 ) bzw. die Achsen (4) oder (4 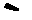 ) in Bewegung setzen, so umgewickelt, daß jeder Teilabschnitt eines Filterschlauches (7) mit aufgelegter Außendrainage (8), mindestens 1 Minute frei von Wasser umspült wird und mit den Ultraschallrohrresonatoren wechselwirken kann. Ohne Rüstzeiten ergibt sich für die oben angenommene Filterfläche eine Ultraschallreinigungszeit von 15 bis 30 Minuten.
Für ein Gehäuse (3) mit 100 Liter Füllvolumen beträgt die Leistung der Ultraschallschwinger zwischen 750 und 2000 Watt.

Die Umwicklung von Achse zu Achse erfolgt wie in Abb. 14B dargestellt bevorzugt in Brillenform. Somit ergeben sich während des Umwickelvorgangs die minimalsten, krümmungsbedingten Versätze zwischen den einzelnen Schichten des Mikrofilterschlauches (7) und beide Seiten des Mikrofilterschlauches (7) können gleichzeitig mit einer Ultraschalleinheit (2) gereinigt werden. Mit einer Ultraschalleinheit (2) lassen sich so auch gleichzeitig zwei Mikrofilterschläuche (7) reinigen.

Das Separationsmedium (7), der Membranschlauch (Mikrofilterschlauch), hat optimaler Weise eine Porengröße von 0,45 µm. Sehr gut geeignet sind Membranen mit hydrophilem Charakter und minimierter unspezifischen Adsorption gegenüber Eiweiß. Besonders wirtschaftlich arbeiten Membranen aus Cellulosehydrat und hydrophilisierten PVDF- und Polysulfonmembranen, insbesondere wenn die Hydrophilisierung mit Acrylpolymeren erfolgt.

Der Membranschlauch (7) ist an den langen Kanten, wie in Abbildung 6A dargestellt, verklebt, wobei die Dichtungszonen (24) bevorzugt durch eine flexible Silikonmasse gebildet werden, um bei den Umwickelvorgängen die Gefahr der Beschädigung durch Bruch oder Haarrißbildung auszuschließen.

Zum Erzeugen der erforderlichen Bauhöhen können mehrere, z.B. je 10 Inch breite Membranschläuche (7) über die gesamte Schlauchfläche oder über Anschlußschläuche miteinander verbunden werden.

### Beispiel 2: Cross-Flow-Mikrofilteranlage zur Kaltserilisation von Bier mit erhöhtem Feststoffgehalt

Gelägerbiere enthalten ebenso wie nicht kieselgurfiltrierte Biere, auch nach geeigneter Vorfiltration (siehe Beispiel 3) noch soviel Feststoffanteile, so daß sich bei der statischen Filtration sehr schnell ein undurchdringlicher Filterkuchen aufbaut.

Das Anlagenkonzept und auch die Separationselemente sind bis auf Nuancen identisch mit den Ausführungen im Beispiel 1. Ein Überströmeffekt wird dadurch erreicht, daß, wie in Abb. 1 dargestellt und vorne beschrieben, das Gehäuseinnere im Separationszustand z.B. durch den Einbau eines, bis auf die Stirnöffnung der Separationselemente geschlossenen, ggf. zur Abdichtung aufblasbaren, Ringkanals (17), in zwei Medienräume geteilt wird und das Bier zwischen diesen beiden Medienräumen, ggf. unter Verdünnung mit neuem Unfiltrat, mittels einer Umwälzpumpe rezirkuliert und aufkonzentriert wird. Gegenüber der herkömmlichen Cross-Flow-Filtration werden wesentlich geringere Überströmgeschwindigkeiten erreicht. Dies bedeutet einen geringeren Energieeintrag und eine geringere Gefahr der Produktschädigung. Kommt es trotz der Überströmung zu einer Membranverblockung oder Verstopfung der Überströmkanäle, so lassen sich die erfindungsgemäßen Separationselemente, wie in Beispiel 1 beschrieben, mehrfach, z.B. mit Ultraschall regenerieren, so daß insgesammt ein wirtschaflicheres und schonenderes Verfahren resultiert.

### Beispiel 3: Vorfiltration von Gelägerbieren für die Cross-Flow-Mikrofiltration gemäß Beispiel 2

Gelägerbiere enthalten bereits einen so hohen Feststoffanteil, daß die im Beispiel 2 beschriebene Cross-Flow-Filtration mit erfindungsgemäßen Separationselementen nur nach entsprechender Feststoffreduzierung, durch z.B. Vorfiltration, erfolgen kann.

Die Vorfiltration mit herkömmlichen, zylindrischen oder plissierten Filterkerzen ist hier äußerst unwirtschaftlich, weil sich auch auf Filtermedien mit 50 bis 150 µm Porengröße, nahezu spontan, ein undurchdringlicher Filterkuchen absetzt. Gute Erfolge zur Problemlösung bringen die erfindungsgemäße Separationselemente und Anlagen, wie sie im Beispiel 1 beschrieben sind. Jedoch sind hier die Filtermedien nicht Mikrofilter, sondern z.B. Spunbond-Vliese oder Meltblown-Vliese (bevorzugt aus Polypropylen), mit Porengrößen zwischen 8 und 100 µm. Insbesondere als äußere Drainagevliese sind sehr grobe, optimaler Weise etwas gewellte, Gitternetze von Vorteil. Zur Verlängerung der Zwischenstandzeit, bis zur Hauptregeneration, ist es von Vorteil, den Filterschlauch während des Filtrationsvorganges permanent umzuwickeln und zumindest zeitweise zu beschallen. Die Beschallungshäufigkeit und die Beschallungsintensität müssen, auf die Anfälligkeit der Resthefe zu lysieren (Zellbruch, Geschmacksbeeinträchtigung), abgestimmt werden.

Eine weitere Verfahrensvariante, die allgemein bei der Vorfiltration von Lösungen mit hohem Feststoffgehalt Vorteile bringt, läßt sich an Hand der Abbildungen 3 und 2 erläutern. Auf der Achse (4) eines Doppelwickels (1, 1 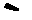 ) befindet sich vor Beginn der Separation ein Wickel (1) aus groben Spunbond-Vliesen oder Geweben. Der Wickelanteil (1 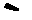 ) auf der anderen Achse (4 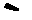 ) ist zunächst auf zwei bis drei Wickel begrenzt, wobei das Anschlußband (23) ein Mikrofiltermaterial (bevorzugt mit einem Stützvlies verstärkt) mit Dichtelementen (25) an den Randzonen ist. Während der Separation ist nur der Abfluß (9) der Achse (4) geöffnet. Um ein Verblocken des Wickelzylinders zu vermeiden wird dieser während der Separation, zusammen mit dem abgeschiedenen Feststoff, langsam auf die Achse (4 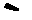 ) umgerollt. Ist der Wickel (1) nahezu abgebaut, so wird die Separation unterbrochen und das Gehäuse (3) entleert. Zur Entfeuchtung des Feststoffes im Wickel (1 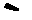 ) wird der Abfluß (9) geschlossen und der Abfluß (9 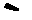 ) geöffnet. Beaufschlagt man dann das Gehäuse (3) mit Druck, ohne den Bubble-Point des Mikrofilters zu überschreiten, so können dem Filterkuchen erhebliche Mengen Feuchtigkeit entzogen werden. Zur Regeneration wird erneut umgewickelt und z.B. zunächt in einer ersten Regenerationswanne (20) ohne Reinigungsmedium, die größte Menge des Feststoffs durch Regenerationseinheiten (2, 2 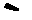 ) mechanisch (Schaber, Bürste) entfernt und anschließend durch eine zweite, nicht gezeichnete, Regenerationswanne geführt, in der z.B. eine Ultraschallreinigung wirksam werden kann.

### Beispiel 4: Feinfilterfilteranlage zur Erzeugung von hefefreien alkoholischen Getränken

Resthefen z.B. nach der Kieselgurfiltration werden heute aus alkoholischen Getränken, wie Wein, Sekt oder Bier häufig mit Schichtenfiltergeräten, die mit sog. Filterschichten bestückt sind, hefesteril filtriert. Die Nachteile dieser Systeme sind allgemein bekannt (offenes System, lange Quellzeiten, Tropfverluste, Druckstoßanfälligkeit, lange Rüstzeiten, Abfallberge ...) und haben zur Entwicklung von Alternativen, wie Filterschichtenmodule für geschlossene Gehäuse und Wickelkerzen aus Feinstfaservliesen (z.B. auf Meltblown-Basis) geführt. Nachteil dieser Systeme ist nach wie vor eine limitierte Regenerationsmöglichkeit und die Gefahr des Durchbruchs abgeschiedener Medien. Mit erfindungsgemäßen Separationselementen, die Feinstfaser-Vliese, als Separationsmedium (7) enthalten und so aufgebaut sind, daß sich im Wickel eine Filterschicht zwischen 5 und 20 mm aufbaut, die in Flußrichtung in der Abscheidung immer feiner wird, wird ein entscheidender Vorteil erreicht, weil die erfindungsgemäßen Separationselemente im Regenerationsmodus Schicht für Schicht regenerierbar sind.

Das Anlagenkonzept für solche Separationselemente ist vom Prinzip her identisch mit dem Konzept aus Beispiel 1. Modifizierungen und Nuancen ergeben sich anwedungsbezogen aus der jeweiligen Problemstellung. Für diesen Typ ergibt sich eine optimale Flächenausnutzung, wenn über zwei Halbwickel (1, 1 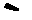 ) gleichen Aufbaus filtriert wird (vergleiche die Abbildungen 4 und 5 und die dazugehörigen Erläuterungen).

### Beispiel 5 : Entalkoholisierung von Bier durch Dialyse

Zur Erzeugung von alkoholfreien Bier wird heute u.a. Bier dialysiert. Dazu wird z.B. durch Matten hohlfaserförmiger Ultrafilter, die von Bier umströmt werden, Wasser geleitet. Aufgrund der osmotischen Gegebenheiten wird Alkohol über die Ultrafiltermembran, die Moleküle mit größerem Molekulargewicht nicht passieren können, ausgetragen. Die sehr feinen Ultrafiltrationsmembranen neigen dabei ebenso stark zur Verblockung, wie die oben beschriebenen Mikrofilter bei der Kaltsterilisation von Bier. Mit den erfindungsgemäßen, regenerierbaren Separationselementen läßt sich somit auch bei diesem Prozeß eine verbesserte Wirtschaftlichkeit erreichen. Das Anlagenkonzept für den Dialyseprozeß entspricht weitgehend dem bei der Cross-Flow-Filtration in Beispiel 2. Die Separations- oder Filtereinheit (18) besteht z.B. aus einer Drainagelage (8), die im gewickelten Zustand eine Überströmung erlaubt und einer ca. 2 m langen Hohlfaserlage als Separationsmedium (7), die die Achsen (4) und (4 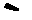 ) im nicht aufgewickelten Zustand expanderartig verbindet. Im Separationszustand (Dialysevorgang) werden die Hohlfasern außen von Bier überströmt und im Inneren über die beiden Anschlußachsen mit Wasser.

Die Regeneration erfolgt, wie in Beispiel 1 beschrieben.

### Beispiel 6 : PVPP-Stabilisierung von Bier mit immobilisiertem PVPP bzw. Fasern oder Feinstfaservliesen aus PVPP

PVPP wird in der Regel direkt im Anschluß an die Kieselgurfiltration in gequollener Form in definierten Mengen dem Bier zur Adsorption von Polyphenolen zudosiert (Stabilisierung; Vermeidung von Nachtrübungen) und muß nach einer definierten Kontaktzeit wieder quantitativ abgetrennt werden. Die Regeneration mit Lauge und die Wiedergewinnung des Granulats ist apparativ sehr aufwendig. Mit einem erfindungsgemäßen Separationselement, das PVPP als Filtervlies, als Faser bzw. Faden enthält oder an bzw. zwischen solchen Vliesen oder Fasern PVPP immobilisiert ist, kann sowohl die Kontaktzeit ("Zudosierung" durch Umwickeln) flexibler gesteuert werden, als auch die Regeneration einfacher und schneller erfolgen.

### Beispiel 7: Aufarbeitung der Reinigungslauge von Kasten oder Flaschenspulmaschinen

Das Anlagen- und Filtrationskonzept entspricht den Beispielen 1 oder 2 und nötige Vorfiltration, den Beispielen 3 oder 4. Ziel ist es die Lauge mehrfach zu verwenden und sie keimarm und frei von ablagerungsfähigen Verunreinigungen einem neuen Reinigungsprozeß zuzuführen. Die Mehrfachverwendung entschärft gleichermaßen die Entsorgungsproblematik. Für die Vorfiltration eignen sich Spunbond- und Meltblown-Vliese auf Polypropylenbasis. Bevorzugte, erfindungsgemäße Separationselemente der Endstufe entsprechen z.B. den zu den Abbildungen 7 gemachten Ausführungen. Die Lagen (5) können z.B. Meltblown-Polypropylen-Vliese und das Haupseparationsmedium (7) eine Polysulfonmikrofiltermembran (ggf. mit Polypropylenverstärkung) sein. Diese Lagen sind so mit Dichtelementen (25) versehen, daß sie im Regenerationsmodus (Umwickelzustand) vereinzelt werden, d.h. allseitig vom Regenerationsmedium frei umspült werden können und im Separationszustand (aufgewickelt unter Spannung) eine strikte Trennung von Unfiltrat- und Filtratraum gewährleisten. Hierzu ist es vorteilhaft die Filterschichten der Separations- oder Filtereinheit (18) im Nahbereich zur Achsenanbindung dicht miteinander zu verbinden und die innere Drainage (8 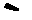 ) entweder ebenfalls mit Dichtelementen (25) zu versehen oder um die Breite der Dichtelemente zu kürzen.

### Beispiel 8: Partikelarme Luft für Reinräume, z.B. EDV-Anlagen in Großbrauereien

Die Luft für Produktions-Reinräume oder sog. Clean-Banches (Reine Werkbänke; z.B. für die sterile Probenahme) wird ebenso wie die Luft für Räume mit hohem Anspruch an die Luftreinheit (Partikelfreiheit), wie es in Großbrauereien Räume für größere EDV-Anlagen sind, wird heute in der Regel durch Filtration über plissierte Filterelmaterialien, insbesondere aus Mikroglasfaser-Vliesen erzeugt. Abgesehen von der Problematik einer möglichen Freisetzung von lungengängigen Glasfaserbruchstücken ist ein Nachteil der eingsetzten Filterelemente, daß sich in ihnen große Mengen an Staub und Bakterien ansammeln, was insbesondere bei ausreichender Luftfeuchtigkeit nicht selten zu einer immer massiver werdenden Geruchsbelästigung führt. Auch steigt der Luftwiderstand und somit die Energiekosten erheblich mit dem Verblockungsgrad. Die Gesamtproblematik läßt sich z.B. dadurch lösen, daß man erfindungsgemäße, regenerierbare Separationselemente einsetzt. Eine Ausführungsform gemäß Typ 2 ist als Faltenpaket (28) in Abb. 8A skizziert. Abbildung 9 stellt den Längsschnitt durch ein Gehäuse (3) dar, in dem ein solches Faltenpaket (28) installiert ist. Anstatt der problematischen Glasfaservliese kommt ein hydrophobes, elektrisch geladenes (Elektretcharakter) Feinstfaser-Vlies (z.B. auf Meltblown-Basis; Abscheideeffizienz gemäß EU 8 bis EU 13) als Separationsmedium (7) zum Einsatz, das, im Verbund mit einem hydrophoben Spunbond-Vlies als Separations- oder Filtereinheit (18), leporelloartig gefaltet ist. Das unterste Blatt der Separations oder Filtereinheit (18) ist fest mit dem Boden (46), daß oberste fest mit dem abnehmbaren Deckel (47) des Filtergehäuses (3) verbunden. Die seitlichen Ränder des Verbundes sind mit Dichtelementen (25) versehen, die im zusammengepreßten Zustand im Gehäuse (3), sowohl eine strikte Trennung des Unfiltrat- und Filtratraumes, als auch eine für den ungehinderten Gasstrom ausreichenden Abstand zwischen den Falten der Separations- oder Filtereinheit (18) gewährleisten. Zur Regeneration kann das Faltenpaket (28) durch Abnehmen des oberen Deckels (47) entfaltet werden. Durch eine definierte Erwärmung auf einer leitenden Oberfläche einer Regenerationseinheit (2 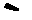 ) wird dann das Filtermedium (7) entladen. Eine vollkommene Staubentfernung erfolgt mit der Regenerationseinheit (2 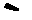 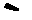 ) durch pulsierendes Ausblasen mit filtrierter Preßluft entgegen der normalen Filtrationsrichtung. Es folgt eine erneute Ladung des erwärmten (Regenerationseinheit (2 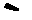 )), isolierten Separationsmediums (7) durch die Regenerationseinheit (2), die eine elektrische Korona erzeugt. Durch Zusammenfalten der Separations- oder Filtereinheit (18) und Verschließen des oberen Deckels (47) unter Druck, ist das Separationsgehäuse (3) wieder betriebsbereit.

## Patentansprüche

1. Regenerierbare Separationselemente
zur Behandlung flüssiger und gasförmiger Medien
mittels
mindestens an einer Stelle fixierter,
fadenförmiger, faserförmiger, flächiger, hohlfaserförmiger, schlauchförmiger oder rohrförmiger, oberflächenaktiver und oder poröser Separationsmittel
aus der Gruppe der Feinstfasern, Spunbond-Vliese, trocken und naßgelegten Papiere und Vliese, Splitfiber-Vliese, Feinstfaser-Vliese und Feinstfaser-Papiere, Mikrofilter, Ultrafilter, Reverse Osmose Membranen, Pervaporations Membranen und Folien,
an die, in denen oder zwischen denen
adsorptiv, katalytisch, biokatalytisch, über ein Zetapotential oder durch Elektretcharakter wirkende Stoffe oder zum Ionenaustausch fähige funktionelle Gruppen oder Medien
gebunden , fixiert oder eingelagert sein können,
die anwendungsbezogen oder konfigurationsbedingt mit Schutz- oder Drainageelementen (8, 8 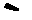 ) versehen oder kombiniert werden können
und während der Separation
in einem Gehäuse (3) mit mindestens zwei Öffnungen (9, 9 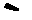 , 10, 11, 15, 16) für die Medienabfuhr oder Medienzufuhr
in dicht gepackter, gestapelter, gewickelter oder gefalteter Konfiguration von dem zu behandelnden Medium
umspült, überströmt und oder durchströmt werden,
dadurch gekennzeichnet,
daß für den Separationsvorgang die gesamte aktive Fläche eines Separationsmediums (7, 7 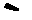 ) eines Separationselements separationswirksam im Medienkontakt gebracht werden kann und
das Separationselement zur Regeneration,
unter Erhaltung der Fixierung der Separationsmedien (7, 7 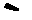 ), der Separations- oder Filtereinheit (18) oder der Separations- oder Filtersegmente (40) an eine für die Konfigurationsänderung, die Medienzufuhr oder die Medienabfuhr notwendige Vorrichtung oder Achse (4, 4 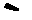 , 39)
durch Vereinzelung der Separationsmedien (7, 7 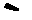 ), der Separations- oder Filtereinheit (18) oder der Separations- oder Filtersegmente (40) in eine andere, für die Regeneration vorteilhafte Konfiguration gebracht werden muß und kann
und diese Konfigurationsänderung mehrfach reversibel und automatisierbar ist.

2. Regenerierbare Separationselemente gemäß Anspruch 1, dadurch gekennzeichnet, daß
das Separationsmedium (7, 7 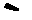 ) aus 2 oder mehreren Lagen desselben oder verschiedener Separationsmitteltypen besteht.

3. Regenerierbare Separationselemente gemäß Anspruch 2, dadurch gekennzeichnet, daß
zwei oder mehr Lagen eines Separationsmediums (7, 7 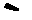 ) getrennt regenerierbar sind.

4. Regenerierbare Separationselemente gemäß Anspruch 1 bis 3 dadurch gekennzeichnet, daß
die Regeneration ein direktes Wechselwirken der zu regenerierenden Komponente oder Zone der Separationsmedien (7, 7 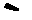 ), der Separations- oder Filtereinheit (18) oder der Separations- oder Filtersegmente (40) mit einem spezifischen Regenerationsmedium (21) erfordert.

5. Regenerierbare Separationselemente gemäß Anspruch 1 bis 3, dadurch gekennzeichnet, daß
die Regeneration ein direktes, spezifisches Zusammenwirken der zu regenerierenden Komponente oder Zone der Separationsmedien (7, 7 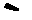 ), der Separations- oder Filtereinheit (18) oder der Separations- oder Filtersegmente (40) mit mindestens einer Regenerationseinheit (2, 2 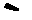 , 2 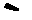 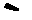 ..) erfordert.

6. Regenerierbare Separationselemente gemäß Anspruch 1 bis 3, dadurch gekennzeichnet, daß
die Regeneration ein direktes, spezifisches Zusammenwirken der zu regenerierenden Komponente oder Zone der Separationsmedien (7, 7 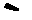 ), der Separations- oder Filtereinheit (18) oder der Separations- oder Filtersegmente (40) mit mindestens einer Regenerationseinheit (2, 2 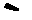 , 2 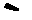 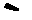 ..) in Kombination mit mindestens einem Regenerationsmedium (21) erfordert.

7. Regenerierbare Separationselemente gemäß Anspruch 1 bis 6, dadurch gekennzeichnet, daß
die Konfigurationsänderung und die Regeneration im Separationsgehäuse bzw. Gehäuse (3) erfolgt.

8. Regenerierbare Separationselemente gemäß einem der Ansprüche 1 bis 7, dadurch gekennzeichnet, daß
das Separationselement im Separationszustand aus einem oder aus zwei miteinander verbundenen Wickeln (1, 1 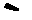 ) besteht, die ein Separationsmedium (7, 7 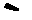 ) enthalten und diese Wickel (1, 1 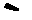 ) zur Regeneration auf-, ab- und umgewickelt werden können.

9. Regenerierbare Separationselemente gemäß einem der Ansprüche 1 bis 7, dadurch gekennzeichnet, daß
das Separationselement im Separationszustand aus einem oder aus zwei miteinander verbundenen, kompakten Faltenpaketen oder Faltenbälgen ( 28, 28 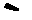 ) besteht, die ein Separationsmedium (7, 7 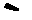 ) enthalten und diese Faltenpakete (28, 28 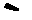 ) zur Regeneration entfaltet, umgefaltet oder umgeklappt werden können.

10. Regenerierbare Separationselemente gemäß einem der Ansprüche 1 bis 7, dadurch gekennzeichnet, daß
das Separationselement im Separationszustand aus einem kompakten Spiralwickel (36) besteht, der ein Separationsmedium (7, 7 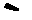 ) enthält und dieser Spiralwickel (36) zur Regeneration auf- oder umgewickelt werden kann.

11. Regenerierbare Separationselemente gemäß einem der Ansprüche 1 bis 7, dadurch gekennzeichnet, daß
das Separationselement ein Segmentstapel (37) ist, der durch mehrere runde, rechteckige oder vieleckige, flächige oder dreidimensionalen Separations- oder Filtersegmente (40), die geeignete Zuschnitte eines Separationsmediums (7, 7 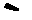 ) enthalten, gebildet wird, wobei die Separations- oder Filtersegmente (40) mit einer Achse (4) oder der Drehachsenführungsachse (39) verbunden sind und zur Regeneration eine Vereinzelung der Separations- oder Filtersegmente (40), ohne Lösung der Verbindung zur Achse (4) oder Drehachsenführungsachse (39) möglich ist.

12. Regenerierbare Separationselemente gemäß einem der Ansprüche 1 bis 11, dadurch gekennzeichnet, daß
das Separationselement Hohlfasern, flexible Rohre oder schlauchförmige Flachfilter oder Kombinationen davon als Separationsmittel enthält, die es erlauben, daß im Separationszustand und Regenerationszustand eine strikte Trennung in zwei Medienräume gegeben ist.

13. Regenerierbare Separationselemente gemäß einem der Ansprüche 5 bis 12, dadurch gekennzeichnet, daß
eine Regenerationseinheit (2, 2 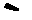 , 2 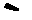 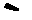 ..) mehrere Regenerationsstufen enthält.

14. Regenerierbare Separationselemente gemäß Anspruch 13, dadurch gekennzeichnet, daß
die Regenerationsstufen nach unterschiedlichen Regenerationsmethoden arbeiten.

15. Regenerierbare Separationselemente gemäß einem der Ansprüche 6 bis 14 dadurch gekennzeichnet, daß
mindestens eine Regenerationseinheit (2) nach dem Prinzip der Ultraschallreinigung arbeitet.

16. Regenerierbare Separationselemente gemäß einem der Ansprüche 1 bis 15 dadurch gekennzeichnet, daß
eine der Achsen oder beide Achsen (4, 4 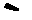 ) ein Separationselemente sind, die bezogen auf die Konstruktion und die Funktion, dem Stand der Technik entsprechen und als Separationsmittel Filter für die Fein-, Mikro- oder Ultrafiltration enthalten.

17. Regenerierbare Separationselemente gemäß Anspruch 8, dadurch gekennzeichnet, daß
sie in einem für den Betrieb der Separationselemente geeignetem Gehäuse (3) zusammen mit Regenerationseinheiten (2) installiert sind.

18. Regenerierbare Separationselemente gemäß Anspruch 17, dadurch gekennzeichnet, daß
die Regenerationseinheiten (2) Ultraschallrohresonatoren sind.

19. Regenerierbare Separationselemente gemäß Anspruch 17 und oder 18, dadurch gekennzeichnet, daß
in einem Gehäuse (3) 3 Separationselemente und eine Regeneratioseinheit (2) wie in Abbildung 14A angeordnet sind und in Wechselwirkung treten können.

20. Regenerierbare Separationselemente gemäß Anspruch 17 und oder 18, dadurch gekennzeichnet, daß
in einem Gehäuse (3) 2 Separationselemente und eine Regeneratioseinheit (2) wie in Abbildung 14B angeordnet sind und in Wechselwirkung treten können.

21. Die Verwendung einer oder mehrerer Varianten der regenerierbaren Separationselemente gemäß einem der Ansprüche 1 bis 20
für die Behandlung von Getränken in diversen Fertigungszuständen.

22. Die Verwendung einer oder mehrerer Varianten der regenerierbaren Separationselemente gemäß Anspruch 21, dadurch gekennzeichnet, daß
das Getränk Bier ist.

23. Die Verwendung einer oder mehrerer Varianten der regenerierbaren Separationselemente gemäß Anspruch 22, dadurch gekennzeichnet, daß
Bier mit immobilisiertem PVPP stabilisiert werden soll.

24. Die Verwendung einer oder mehrerer Varianten der regenerierbaren Separationselemente gemäß einem der Ansprüche 1 bis 20
für die Behandlung von Gasen.

25. Die Verwendung einer oder mehrerer Varianten der regenerierbaren Separationselemente gemäß Anspruch 24, dadurch gekennzeichnet, daß
Elektretmaterialien als Separationsmittel zur Gasbehandlung Verwendung finden.

26. Die Verwendung einer oder mehrerer Varianten der regenerierbaren Separationselemente gemäß Anspruch 25, dadurch gekennzeichnet, daß
die Elektretwirkung eines Separationsmediums (7) regeneriert wird.

27. Geschlossene Gehäuse (3) für regenerierbare Separationselemente, mit mindestens 2 Öffnungen (9, 10, 11, 15, 16, 49) für die Medienabfuhr oder Medienzufuhr, dadurch gekennzeichnet, daß
es Vorrichtungen zur Vereinzelung von Separations- oder Filtersegmenten (40), von Separations- oder Filtereinheiten (18) oder von Separationsmedien (7, 7 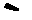 ) eines regenerierbaren Separationselementes enthält.

28. Gehäuse (3) für regenerierbare Separationselemente gemäß Anspruch 27, dadurch gekennzeichnet, daß
im Gehäuse (3) mindestens ein bewegbarer, mit einer Achse (4, 4 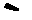 , 39) des Separationselementes und oder einer Vereinzelungsvorrichtung verbindbarer Achsenanschluß (12, 12 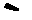 ) installiert ist

29. Gehäuse (3) für regenerierbare Separationselemente gemäß Anspruch 28, dadurch gekennzeichnet, daß
dem Gehäuse (3) Medium über den Achsenanschluß (12, 12 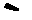 ) zugeführt oder von ihm abgeführt werden kann.

30. Gehäuse (3) für regenerierbare Separationselemente gemäß Anspruch 27 bis 29, dadurch gekennzeichnet, daß
die Vereinzelungsvorrichtung in einer Führungsspur (35) bewegbar ist.

31. Gehäuse (3) für regenerierbare Separationselemente gemäß einem der Ansprüche 28 bis 30, dadurch gekennzeichnet, daß
im Gehäuse (3) eine oder mehrere Regenerationswannen (20) installiert sind.

32. Gehäuse (3) für regenerierbare Separationselemente gemäß einem der Ansprüche 28 bis 31, dadurch gekennzeichnet, daß
im Gehäuse (3) eine oder mehrere Regenerationseinheiten (2, 2 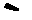 , 2 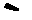 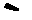 ..) installiert sind.

33. Gehäuse (3) für regenerierbare Separationselemente gemäß Anspruch 32, dadurch gekennzeichnet, daß
im Gehäuse (3) Regenerationseinheiten (2, 2 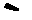 , 2 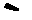 ..) für verschiedene Regenerationsmethoden installiert sind.

34. Gehäuse (3) für regenerierbare Separationselemente gemäß Anspruch 32 und 33, dadurch gekennzeichnet, daß
Regenerationseinheiten (2) für die Ultraschallreinigung installiert sind.
